# EUROPÄISCHE PATENTANMELDUNG

(11) **EP 1 624 242 A2**
(43) Veröffentlichungstag der Anmeldung: **08.02.2006**
(21) Anmeldenummer: 05016625.5
(22) Anmeldetag: 30.07.2005
(51) Int. Cl.: F16L 59/20, F16L 13/02, F16L 59/02, F16L 47/02, F16L 41/08, B29C 65/34, B32B 7/00

(54) **Wärmebehandlung an Rohren und Rohrstössen von isolierten Erdgasleitungen**

(30) Priorität: 04.08.2004 DE 102004037932; 13.03.2005 DE 102005011810
(71) Anmelder: Stucke, Walter, 40878 Ratingen (DE)
(72) Erfinder: Stucke, Walter, 40878 Ratingen (DE)
(74) Vertreter: Kaewert, Klaus

(57) **Zusammenfassung**

Nach der Erfindung werden zur Wärmebehandlung beim Abisolieren und beim Nachisolieren an Rohrverbindungen und Abzweigungen von Erdgasleitungen Heizmanschetten und Heizmatten verwendet.

## Beschreibung

Die Erfindung betrifft die Wärmebehandlung an Rohren und Rohrstößen von isolierten Erdgasleitungen. Wärmebehandlungen kommen zu unterschiedlichen Zwecken an den Rohrenden und Rohrstößen von isolierten Erdgasleitungen vor. Ein Zweck ist das Isolieren, ein anderer das Abisolieren. Ein weiterer Zweck ist das Nachisolieren.

Die Erdgasleitungen sind im Erdreich wie auch oberhalb des Erdreiches feuchtigkeitsbelastet. Deshalb rosten Erdgasleitungen aus Stahl. Zusätzlich kann es zu einer Elektrokorrosion kommen.

Die Erdgasleitungen sind insbesondere als Erdgasleitungen zum allergrößten Teil im Erdreich verlegt. Dort kommt es zu elektrischen Spannungen und zu Stromfluß bzw. zu Streuströmen. Zusammen mit der Feuchtigkeit im Erdreich und der Beschaffenheit des Erdreiches beinhaltet das eine große Korrosionsgefahr. Durch Korrosion kann es ohne weiteres zu einem Stahlabtrag am Stahlrohr von 9 bis 10 kg pro Jahr und zu Fehlerbereichen kommen. Die Leckagen sind dann absehbar. Bei Leckagen wird weniger der Verlust an Erdgas als die Explosionsgefahr z..B. an Erdgasleitungen, als nicht tolerierbar angesehen. Zur Vermeidung von Korrosion ist es deshalb üblich, Stahlrohre mit einer Isolierung zu versehen.

Stand der Technik für die Isolierung sind eine Vorbehandlung der zu isolierenden Rohrflächen und ein mehrschichtiger Isolierungsaufbau. Es wird ein zweischichtiger und ein dreischichtiger Isolierungsaufbau angeboten. Die bekannten Isolierungen haben sich insbesondere als 3-Schichten-Schutz mit einer Epoxidharz(EP)-Schicht, einer Kleberschicht und einer Polyethylen(PE)-Schicht bewährt. Die Technik für das Aufbringen von Kleberschicht und PE-Schicht ist in der Veröffentlichung "Prüfung von beschichteten Rohren" Mitteilung der Mannesmannröhren-Werke AG, 1973, VDI-Verlag Düsseldorf, beschrieben. Desgleichen ist dort ein Pulveraufschmelzverfahren beschrieben, das zum Auftragen von EP-Schichten verwendet wird.

Probleme entstehen dann, wenn die Isolierung bei der Montage verletzt wird. Die Verletzung kann aus mehreren Gründen entstehen. Bei der Montage/Schweißen müssen Stahlrohre aneinander gesetzt werden. Zum Schweißen werden die Rohrenden in einem ausreichenden Umfang von der Isolierung befreit. Nach dem Schweißen kommt es darauf an, die Schweißstelle ausreichend nachzuisoliereti. Zum Nachisolieren werden die Schweißstellen behandelt und häufig mit lsolierungsbändern umwickelt. Es ist auch bekannt, Schrumpfmuffen zum Nachisolieren von Rohrstößen zu verwenden. Die Schrumpfmuffen werden vor dem Schweißen auf eines der zu verbindenden Rohrenden geschoben und zwar so weit, daß sie durch den Schweißvorgang nicht beschädigt werden. Nach dem Schweißen werden die Schrumpfmuffen über die Schweißstelle geschoben. Dabei wird eine ausreichende Überlappung mit der bestehenden Rohrisolierung gewahrt. Durch Erwärmung der Schrumpfmuffe mit offener Flamme tritt der Schrumpf ein. Die Schrumpfmuffe umschließt die beiden Rohre an dem Rohrstoß dicht.

Das Problem der Nachisolierung stellt sich nicht nur an den Rohrstößen bzw. Rohrverbindungen sondern auch an den sogenannten Abzweigung von Erdgasleitungen. Bei einem Hausanschluß an eine Erdgasleitung wird eine Leitung sehr viel kleineren Durchmessers mit der Erdgasleitung verbunden. Üblicherweise wird die Erdgasleitung im Anschlußbereich von der Isolierung befreit, ein ausreichendes Loch bzw. ausreichender Abgang in die Erdgasleitung eingebracht und ein Anschlußflansch bzw. Anschweißfitting als ein Teil der Anschlußleitung an die Erdgasleitung angeschweißt. Die Schweißstelle wird wiederum behandelt und danach mit den bekannten Bändern umwickelt. Außerdem wird davon ausgegangen, daß die bekannte Wickel- und Bänderisolierung nicht immer die optimale Isolierung ist. Es wurde erkannt, daß eine offene Flamme an der Kunststoffisolierung Probleme verursachen kann. Desgleichen kann das zum Reinigen von Stahlflächen und Rohrverbindungen eingesetzte Lösungsmittel Probleme verursachen. Das gilt auch für Voranstrich-Lack.

Zur Beseitigung obiger Probleme ist nach einem älteren Vorschlag der EP1382896 A2 vorgesehen, eine Schrumpfmuffe an der Verbindung von Leitungsrohr und Abzweigung einzusetzen. Vorzugsweise wird das mit einer Technik zum Abisolieren kombiniert, wie sie in der EP 0213061 beschrieben ist. Die bekannte Technik zum Abisolieren geht davon aus, daß bei mehrschichtiger Isolierung mit einer Epoxid-Unterschicht(EP-Schicht) nur eine Durchtrennung der Isolierung bis zur EP-Schicht erfolgt und daß die EP-Schicht in einem Überlappungsbereich mit der Nachisolierung verbleibt. Zwischen dem Überlappungsbereich und dem zu verschweißenden Rohrende ist eine vollständige Abisolierung des Stahlrohres vorgesehen, um die Schweißstellen für den Schweißvorgang frei zu machen.

Nach einem älteren Vorschlag wird unter dem üblichen Kunststoffmantel der isolierten Rohre bzw. unter der üblichen Schrumpfmuffe der nachisolierten Schweißstellen eine kontrollierte, insbesondere eine haftungsfreundliche Rohroberfläche von Vorteil ist. Dabei erfolgt nach dem Schweißen das Reinigen der Schweißstelle und wird auf die gereinigte Fläche eine EP-Schicht und/oder eine Siliziumdioxid-(SiO₂)-Schicht und/oder Titandioxid(TiO₂)-Schicht, gegebenenfalls auch eine andere Schutzschicht aufgebracht. Die Siliziumdioxidschicht und/oder Titandioxidschicht kann auch allein oder zusätzlich an anderer Stelle in dem Schichtenaufbau vorgesehen sein. Wahlweise kann auch Siliziumdioxid und/oder Titandioxid in Mischung mit dem EP oder mit dem Material des Kunststoffmantels bzw. mit dem Material der Kunststoffmuffe oder dem Kleber Einsatz finden. Im weiteren wird von PE gesprochen. Damit sind der Kunststoffmantel und die Kunststoffmuffe gemeinsam gemeint, wenn nicht ausdrücklich der Kunststoffmantel oder die Kunststoffmuffe einzeln angesprochen sind.

Für das Reinigen kommen diverse Verfahren in Betracht. Das schließt mechanische Verfahren wie das beschriebene Bürsten und Sandstrahlen oder Strahlen mit Stahlkugeln ein. Die gereinigte Fläche bietet eine ausreichende Haftung für die dichte Verbindung mit einer Schrumpfmuffe. Vorzugsweise ist darüber hinaus zwischen der gereinigten Stahlfläche und der Schrumpfmuffe ein Haftvermittler vorgesehen. Der Haftvermittler kann ein Kleber sein. Wahlweise ist zusätzlich eine Lackierung der gereinigten Stahlfläche für die Haftvermittlung vorgesehen. Desgleichen kann eine Beschichtung mit einem EP-Pulver zur Haftvermittlung erfolgen, das dann auf der gereinigten Stahlfläche verschmolzen wird.

Die Aufbringung von pulverförmigem EP sieht vorzugsweise einen Korndurchmesser von 0.01 mm bis 0.02 mm vor. Je kleiner der Korndurchmesser des Pulvers ist und je genauer die Aufschmelzung erfolgt, desto gleichmäßiger bildet sich eine EP-Schicht auf dem vollständig abisolierten Rohrende aus.

Korngrößen kleiner oder gleich 0,005 mm werden jedoch nach Möglichkeit vermieden, wenn die beteiligten Mannschaften mit dem Pulver in Berührung kommen können. Bei solch kleinkörnigem Pulver wird eine Belastung der Lungen befürchtet. Sofern die Aufbringung des EP-Pulvers mit geeigneter Kapselung erfolgt, ist die oben beschriebene Korngrößengrenze unbeachtlich.

Zur Gleichmäßigkeit trägt auch die Art des Pulverauftrages bei.
Günstig ist es, das Pulver aufzustreuen und/oder aufzublasen und/oder aufzuschleudern. Zum Aufschleudern wird auf die oben erwähnte Veröffentlichung Bezug genommen.
Um die Nachisolierungsstellen herum kann auch ein Wirbelbett aufgebaut werden. Auch die Kombination verschiedener Verfahren kann von Vorteil sein, z.B. das Streuen von oben und das Schleudern von unten.

Beim Aufbringen können Pulver und/oder Beschichtungsflächen vorgewärmt werden. Desgleichen kann mit einem erwärmten Trägergas zum Anblasen des EP-Pulvers gearbeitet werden. Trägergastemperaturen können zum Beispiel bis 60 Grad betragen.
Die Erwärmung kann auch in anderer Form aufgebracht werden, zum Beispiel durch Heißgas und/oder durch Strahlung und/oder auf induktivem Wege.

Die Vorwärmtemperatur der Beschichtungsflächen kann wesentlich höher als die Vorwärmtemperatur des Pulvers sein. Die Erwärmung der Beschichtungsflächen kann verschieden erfolgen. Günstig ist eine induktive Erwärmung.

Die Erwärmung des Pulvers kann allein vom Trägergas verursacht werden. Es kann auch eine davon unabhängige Erwärmung mittels geeigneter Heizstrecken erfolgen.

Aufgrund der Erwärmung des EP-Pulvers kann das EP-Pulver unmittelbar beim Auftreffen auf der Beschichtungsfläche kleben. Das Kleben der auftreffenden Pulverpartikel erleichtert die gleichmäßige Beschichtung.
Die Erwärmung wird so gesteuert, daß die Pulverpartikel auf der Stahloberfläche aufschmelzen.

Für die Beschichtung ist ferner die geringe Dicke der EP-Schicht günstig. Die Dicke beträgt 0.01 bis 0.1 mm, vorzugsweise 0.04 bis 0.06 mm. noch weiter bevorzugt 0.05 mm.

Bei der geringen Schichtdicke ist die Kräfteverteilung günstig. Das erweichte EP verläuft zu einer Schicht, ohne abzutropfen. Nicht einmal Tropfnasen sind bei geringer Schichtdicke zu befürchten.

Es kommen auch andere Beschichtungsverfahren für das Aufbringen des EP-Pulvers in Betracht. Zu den anderen Beschichtungsverfahren gehört auch eine statische Aufladung der Stahlfläche und des Pulvers, so daß das Pulver aufgrund der Ladungskräfte an der gereinigten Stahlfläche haftet. Danach kann das Pulver durch die oben beschriebene Erwärmung zu einer Schicht verschmolzen werden.
Nach dem Aufschmelzen soll die EP-Schicht aushärten.
Die Aushärtung des EP erfolgt abhängig von der Materialbeschaffenheit. Das gilt zumindest für das EP-Material. Je nach EP-Material kann eine Glasübergangstemperatur von 65 bis 90 Grad Celsius maßgebend sein. Darüber hinaus kann das Material der Schrumpfmuffe Berücksichtigung finden.. Je nach Material hat die Schrumpfmuffe einen Erweichungspunkt, der zum Beispiel zwischen 111 und 160 Grad Celsius liegen kann. In Abhängigkeit von den beteiligten Materialien erfolgt die Aushärtung des EP. Die Aushärtetemperatur kann auch zwischen 130 und 200 Grad Celsius liegen. Bei geringerer Aushärtetemperatur ist eine längere Aushärtezeit vorgesehen. Je nach Temperatur kann die Aushärtezeit zum Beispiel 30 min betragen. Solche Aushärtezeiten sind aus der üblichen Rohrisolierung für neue Rohre bekannt.

Die übliche Rohrisolierung erfolgt kontinuierlich. Dabei sind die genannten Aushärtezeiten von 30min aufgrund der Länge der Wärmebehandlungseinrichtungen und aufgrund des Verfahrens unproblematisch.
Etwas anderes gilt für die Nachisolierung. Bei der Nachisolierung bedingt eine so lange Aushärtezeit eine entsprechende Verweildauer der Mannschaft an der Nachisolierungsstelle. Wahlweise wird die Aushärtezeit verringert, um die Nachisolierungszeit und damit auch die Kosten zu verringern. Nach dem älteren Vorschlag wird durch Auswahl von EP mit höherer Glasübergangstemperatur und mit höherer Aushärtetemperatur eine wesentliche Verringerung der Aushärtezeit erreicht. Überraschender Weise kann die Aushärtezeit auf 20min. 10 min. 5min. sogar bis auf 2 min reduziert werden.
Die Verringerung der Aushärtezeit ist auch unabhängig von der Frage der Nachisolierung für die Rohrisolierung von Vorteil, weil dadurch weniger Anlagevolumen für die Rohrisolierung erforderlich ist, weil auch weniger Energie für die Aushärtung eingebracht werden muß

Die notwendige Erwärmung für die Aushärtung wird in gleicher Weise wie für die Verschmelzung aufgebracht werden.
Nach dem älteren Vorschlag wird wahlweise zusätzlich die Wärme der Schrumpfmuffe für die Aushärtung genutzt. Umgekehrt kann auch die Wärme der Rohrverbindung oder Abzweigung für den Schrumpfvorgang genutzt werden.

Zur Einflussnahme auf die Aushärtung der EP-Schicht und/oder zur Einflussnahme auf den Schrumpfvorgang schließt sich der Schrumpfvorgang der Schrumpfmuffe vorzugsweise zeitlich möglichst dicht an die Bildung der EP-Schicht an. Dabei muß die Schrumpfmuffe nach Bildung der EP-Schicht über die Verbindungsstelle bzw. über die Abzweigstelle gezogen werden. Je nach Handhabung der Schrumpfmuffe kann es erforderlich werden, vor der Positionierung der Schrumpfmuffe zunächst eine ausreichende Festigkeit der EP-Schicht durch Abkühlung sicherzustellen, damit eine Berührung der Schrumpfmuffe keine Verletzung der EP-Schicht verursacht.
Nach der Positionierung der Schrumpfmuffe wird die Schrumpfmuffe auf Schrumpftemperatur erwärmt. Dabei ist es von Vorteil, die Muffe innen und außen zu erwärmen. Die Erwärmung von innen kann wahlweise mit Heißgas und/oder durch die noch warme EP-Schicht erfolgen. Es kommen auch andere Erwärmungsvorgänge in Betracht.

Die Schrumpftemperatur ist materialabhängig.

Die höhere Glasübergangstemperatur und die höhere Aushärtetemperatur sind bei dem EP von den Bausteinen/Bestandteilen des EP abhängig. Für harte EP-Schichten finden aromatische Dicarbonsäuren Verwendung. Für flexible EP-Schichten finden aliphatische Dicarbonsäuren Verwendung.
Günstig ist regelmäßig eine Stabilisierung des Makromoleküls. Dazu eignen sich besonders sekundäre Wasserstoffbrücken.

Die Glasübergangstemperatur ergibt sich als ein relativ geringes Temperatur-Intervall zwischen energieelastischem und entropieelastischem Verhalten. Die Übergangstemperatur dieser Veränderung ist die Veränderung des E-Moduls des Produktes und wird als Glasübergangstemperatur bezeichnet. Normalerweise liegt die Glasübergangstemperatur bei EP zwischen +20 und +40 Grad Celsius. In Sonderfällen liegt die Glasübergangstemperatur bei EP zwischen -100 und +100 Grad Celsius.

Wie oben beschrieben, kommt zusätzlich oder anstelle der EP-Schicht noch eine SiO₂-Schicht auf dem Rohr in Betracht. Vor allem die zusätzliche Schicht trägt erheblichem zum Korrosionsschutz bei. Die SiO₂-Schicht ist praktisch Kohlendioxid-undurchlässig. Eine sonst befürchtete Korrosion

Fe + O₂ + CO₂ + H₂O zu Fe₂O₃

wird verhindert. Hierdurch wird ein Korrosionsvorgang es Stahls im Eisen-Anteil vermieden und die Langzeitnutzung des Stahlrohrsystems auch unabhängig von Kathodenschutz wesentlich verlängert.

Es ist von Vorteil, als SiO₂ überwiegend α-Tridymit zu verwenden, welches in reiner Form bei 117 Grad Celsius schmilzt und sich in β-Tridymit umwandelt. Verunreinigungen des Tridymits führen zu einer Temperatur-Verschiebung, zumeist zu einer Erhöhung des Schmelzpunktes.

Darüber hinaus kann eine vorteilhafte Kombination durch Reaktion mit der EP-Schicht bei einer Temperatur im Bereich von 130 bis 180 Grad Celsius erreicht werden. Das Siliziumdioxid ist für jede Aushärtetemperatur geeignet.

Die vorstehend beschriebenen Vorteile ergeben sich nicht nur bei der Nachisolierung sondern auch bei der ersten Isolierung der Stahlrohre.

Die Aufbringung des Siliziumdioxids kann wie die Aufbringung der EP-Schicht erfolgen. Günstig sind dabei Körnungen des Siliziumdioxids von 0,008 bis 0,03 mm.

Vorzugsweise werden das Siliziumdioxid und das Titandioxid in Pulverform aufgebracht. Dabei ist kein Aufschmelzen von Siliziumoxid oder Titandioxid vorgesehen. Vielmehr soll ein thermoplastischer Zumischungsanteil im Siliziumpulver und/oder Titandioxidpulver aufschmelzen. Das Pulver wird vorzugsweise mit mindestens 50 Grad Celsius vorgetrocknet und vorgewärmt aufgetragen. Günstig ist zugleich eine Vorwärmung der Auftragsfläche am Rohr. Die Vorwärmung des Pulvers liegt unter der Schmelztemperatur, um zu verhindern, daß das Pulver bereits auf dem Transportweg schmilzt und an unerwünschter Stelle haftet.

Die Vorwärmung der Auftragsfläche ist so gewählt, daß das Pulver sofort an der Auftragsfläche klebt und aufschmilzt, aber nicht abtropft.

Vorteilhafterweise können die gleichen Vorrichtungen wie beim Aufbringen der EP-Schicht für das Aufbringen von Siliziumdioxid und für das Aufbringen von Titandioxid verwendet werden.
Alternativ ist es möglich, das Titandioxid und das Siliziumdioxid durch eine elektrostatische Aufladung zum Haften an der Auftragsfläche zu bringen.

Die entstandene Siliziumschicht bewirkt eine wesentliche Verbesserung des bekannten Schichtenschutzes an Stahlrohren.

Günstig ist dabei die Einhaltung einer Dünnschicht, bei der die Adhäsionskräfte der Partikel groß genug sind, um sie an der Rohroberfläche zu halten.

Für die Wirkung der Dünnschichten ist auch maßgebend, welche Rauhigkeit die Oberfläche des Stahlrohres besitzt. Die Rauhigkeit kann in weiten Grenzen durch Stahlstrahlen der Rohroberfläche bei dessen Reinigung vor der Nachisolierung eingestellt werden. Die richtige Rauhigkeit für das jeweils verwendete Material kann mit einigen Versuchen eingestellt werden.

Siliziumdioxid ist in der Natur weitverbreitet und findet sich sowohl in kristallisierter wie auch in amorpher Form. Kristallisiert kommt es in drei verschiedenen Kristallarten vor: als Quarz, als Tridymit und als Cristobalit. Die übliche Erscheinungsform ist dabei der Quarz. α-Tridymit hat eine metastabile Form. Die Zusammenhänge sind in dem nachfolgenden Zustandsdiagramm für Siliziumdioxid dargestellt. Wahlweise lassen sich die unterschiedlichen Siliziumdioxide auch künstlich herstellen.
Die unterschiedlichen Vorkommen ermöglichen in einfacher Form eine Mischung von unterschiedlichem Siliziumdioxid.

Vorzugsweise ist eine Mischung aus Tridimit mit einem Umwandlungspunkt von 117 Grad Celsius und Cristobalit mit einem Umwandlungspunkt von 250 Grad Celsius vorgesehen.

Von Vorteil ist auch die Verwendung von Siliziumdioxid in Plättchenform. Die Plättchen können so aufgetragen werden, daß sie einander schuppenförmig überlappen.

Im Falle des Auftragens auf der EP-Schicht bildet das Siliziumdioxid auf der Innenseite der Kleberschicht eine eigenständige in sich geschlossene Schicht.
Dem Aufschmelzen des Siliziumdioxids ist die Eigenwärme der Kleberschicht von mindestens 150 Grad Celsius und die Eigenwärme der anschließend aufgebrachten PE-Schicht von mindestens 165 Grad Celsius förderlich.

Bei der beschriebenen Siliziumdioxid-Mischung hat der Mischungsanteil mit dem Umwandlungspunkt von 117 Grad Celsius vorzugsweise einen Anteil von 95 bis 99Vol% an der gesamten Siliziumdioxid-Mischung. Die jeweils restlichen Vol% können durch das Siliziumdioxid mit dem Umwandlungspunkt von 250 Grad Celsius dargestellt werden. Dabei handelt es sich dann vorzugsweise um 5 bis 1Vol% Cristobalit. Jeder Mischungsanteil kann eine andere Korngröße bzw. ein anderes Kornband besitzen. Zum Beispiel kann der eine Mischungsanteil eine Korngröße von 0,008 bis 0,015 mm und der andere Mischungsanteil eine Korngröße von 0,015 bis 0,03 mm besitzen.
Die Schichtdicke der vorgesehenen Siliziumschicht beträgt wahlweise 0,005 bis 0,02 mm.

Der Zustand des Siliziumdioxids in der Schicht ändert sich bei Erwärmung.
Bei einer Zustandsänderung mit Überschreitung eines höheren Umwandlungspunktes wird Energie aufgenommen und ggfs. gespeichert. Die Energie wird der Umgebungswärme oder einer elektrischen Ladung des Umfeldes entnommen. Dies wird im folgenden als höherer Zustand bezeichnet. Im höheren Zustand verbessern sich einige gewünschten Isolierungseigenschaften des Siliziumdioxids. Das heißt, unter Wärmebelastung und Strombelastung wird die Siliziumdioxidschicht noch besser, während sich herkömmliche Beschichtungen, die nur aus Thermoplasten bestehen, verschlechtern.

Vorteilhafterweise ist die Isolierung nicht toxisch, so daß die Handhabung problemlos ist, desgleichen die Verlegung im Erdreich.
Auch beim Schweißen sind keine nachteiligen Folgen für die Rohrverleger oder für die Umwelt oder für das Stahlrohr zu erwarten, wenn die Siliziumdioxidschicht der Schweißwärme ganz oder teilweise ausgesetzt wird.

Die Siliziumdioxid bleibt bis zum Schmelzpunkt stabil, der bei reinem Siliziumdioxid bei 1700 Grad Celsius liegt. Weitere Vorteile ergeben sich durch die Trocknung des Siliziumdioxids. Aufgrund entsprechenden Trocknungsgrades reduziert sich der Volumenschrumpf. Vorzugsweise wird die Trocknung so weit getrieben, daß der Schrumpf kleiner oder gleich 0,2Vol% bezogen auf das Volumen der Silizitunsehicht ist.
Durch den vernachlässigbaren Schrumpf werden Spannungen vermieden.
Ganz besondere Vorteile ergeben sich gegenüber der Belastung der Isolierung aus Bremsströmen bzw. Streuströmen. Die Siliziumdioxidschicht hat nämlich eine ähnliche Dielektrizitätsgröße wie PE. Dadurch wird in dieser Hinsicht die bisherige Isolierung wesentlich gesteigert, wobei die Standzeit der Siliziumschicht wesentlich länger als die Standzeit von PE oder anderem Kunststoff ist.

Im Vergleich zu einem Schichtenschutz gemäß dem älteren Vorschlag nach der EP138289A2 ergeben sich mit einer Siliziumdioxid/Titandioxidschicht folgende Aushärtetemperaturen und Härtezeiten.

| | 1 | 2 | 3 | 4 | 5 |
|---|---|---|---|---|---|
| 1 | EP-Vorkondensat | 100 | 92.5 | 87,5 | - |
| 2 | TiO₂ | 0 | 2,5 | 2,5 | - |
| 3. | SiO₂ | 0 | 5,0 | 10,0 | - |
| 4 | Aushärtetemp.in°C | 130-180 | 180 | 180 | 5' |
| 5 | Aushärtetemp.in °C | - | 150 | 150 | 10' |
| 6 | Aushärtetemp.in °C | - | 130 | 130 | 15' |
| 7 | %Anteil o. Härtezeit | %Anteil | %Anteil | %Anteil | Härtezeit |

Für die Nachisolierung ist es von Vorteil, die Rohrenden mit der Nachisolierung auf größerer Länge zu überlappen. Das gilt besonders für geringere Aushärtetemperatur. Die Überlappung kann zum Beispiel 50 bis 300 mm Länge je Rohrende besitzen.
Von Vorteil ist ein gestuftes Abisolieren. Dabei wird zunächst der Kunststoffaußenmantel bzw, der PE-Mantel auf einer größeren Länge als die darunter liegende EP-Schicht entfernt, so daß vor dem Ende der PE-Schicht noch ein EP-Streifen auf dem Rohrende sichthar ist.

Die Schrumpfmuffe übergreift in der Isolierstellung beide miteinander verbundene Rohrenden. Dabei erstreckt sich die Schrumpfmuffe vorzugsweise bis über den beim Abisolieren stehen gebliebenen EP-Streifen auf die vom Abisolieren unberührte Rohrisolierung.

Die Anwendung der Schrumpfmuffe beschränkt sich bisher nur auf gerade Rohrverbindungen. Für Abzweigungen gibt es keine Schrumpfmuffen.

Wahlweise ist für Abzweigungen eine Schrumpfmuffe vorgesehen, welche zumindest teilweise der Abzweigung angepaßt ist. Die Anpassung kann verschieden erfolgen:

Wahlweise wird dabei eine Schrumpfmuffe verwendet, die entsprechend groß ist und an der Stelle der Abzweigung mit einer Öffnung versehen ist, so daß die Schrumpfmuffe über die Abzweigung gezogen werden kann und die Abzweigung nach dem Schrumpf durch das Loch hindurch ragt. Dadurch erleichtert sich die Isolierung schon wesentlich. An der Abzweigung kann in herkömmlicher Wicklung ein Anschluß der Isolierung an die Schrumpfmuffe erfolgen.
Die montierte Abzweigung kann danach gleichfalls mit einer als Schrumpfteil ausgebildeten Kappe oder dergleichen umschlossen werden.

Wahlweise wird eine T-förmige Schrumpfmuffe verwendet, die an der Stelle der Abzweigung nicht nur das Loch sondern zusätzlich einen der Abzweigung bzw. dem Anschweißfitting nachgebildeten Rohrstutzen aufweist. Die Schrumpfmuffe wird wie die zuvor erläuterte Schrumpfmuffe gehandhabt, kann aber sowohl die Erdgasleitung als auch die Abzweigung umschließen.

Wahlweise umfaßt die Schrumpfmuffe auch nur die Abzweigung. Dann kann in herkömmlicher Wicklung mit Isolierungsbändern ein Anschluß der Isolierung an das Leitungsrohr erfolgen.

Sofern die Abzweigung beim Neubau der Erdgasleitung geplant ist, kann die Schrumpfmuffe auf das entsprechend vorbereitete Stahlrohr der Erdgasleitung gezogen werden. Wie oben beschrieben, erfolgt die Vorbereitung der Erdgasleitung durch Einbringen einer Öffnung in die Stahlleitung und durch Anschweißen eines Stahlflansches für die Abzweigung. Vorzugsweise erfolgt vor dem Schweißen und nach dem Schweißen eine Reinigung der Schweißflächen. Eine vorteilhafte Reinigung erfolgt mit Stahlstrahlung. Die Stahlstrahlung unterscheidet sich von der Sandstrahlung durch die Verwendung von Stahlkugeln anstelle von Sand.

Die Schrumpfmuffe wird nach dem Reinigen der Schweißflächen und gegebenenfalls nach dem Auftragen von zusätzlichen Isolierschichten über die Abzweigung und über die Schweißstelle gezogen und geschrumpft. Vorteilhaft ist, wenn die Schrumpfmuffe sich mit der Kunststoffisolierung überlappt. Das Überlappungsmaß beträgt vorzugsweise mindestens 10mm und vorzugsweise höchstens 50mm. Das Überlappungsmaß wird bei schräg verlaufenden oder bogenförming verlaufenden Schnitten in der Kunststoffisolierung vom Schnittrand am Außenmantel an gerechnet.

Alternativ kann die Schrumpfmuffe vor dem Verschweißen über die Abzweigung geschoben werden. Zum Verschweißen der Rohrstöße werden die Enden der Schrumpfmuffe zurückgeschoben, um eine Beschädigung durch Schweißen zu verhindern. Nach dem Verschweißen können die Schrumpfenden wieder vorgeschoben werden und kann der Schrumpf beginnen.

Wahlweise ist auch ein Schweißen der Rohrenden unter der Schrumpfmuffe möglich. Dazu sind die Schrumpfmuffen dann mit Abstandshaltern oder Spreitzern versehen. Der Abstandshalter und Spreitzer gewährleistet während der Erwärmung der Schweißflächen einen ausreichenden Abstand der Schrumpfmuffe, um eine Beschädigung durch die Schweißwärme zu vermeiden. Günstig ist dabei eine Elektroschweißung, weil die Elektroschweißung sehr viel geringe Wärmebelastungen für die Umgebung frei setzt als bei einer autogenen Schweißung.

Die Schrumpfmuffen können einstückig sein oder aus einem oder mehreren Teilen zusammengesetzt werden.
Wahlweise können auch mehrere Schrumpfmuffen zu einer Gesamtschrumpfmuffe zusammengesetzt werden. Dabei ist vorzugsweise eine schlauchartige Schrumpfmuffe vorgesehen, die an der Erdgasleitung in Leitungslängsrichtung den gesamten Nachisolierungsbereich überdeckt. Vorzugsweise ist zusätzlich eine Überlappung der schlauchartigen Schrumpfmuffe mit der Kunststoffisolierung auf den Rohren vorgesehen. Die Überlappung beträgt vorzugsweise mindestens 10mm und vorzugsweise höchstens 50mm.

Im Bereich der Abzweigung ist die Schrumpfmuffe in der oben beschriebenen Form gelocht. Diese Schrumpfmuffe wirkt vorzugsweise mit einer weiteren topfartig ausgebildeten Schrumpfmuffe zusammen, die über den Anschlußflansch oder Anschlußstutzen der Abzweigung gezogen werden kann und mit der anderen Schrumpfmuffe verbunden werden kann. Dabei kann die topfartige Schrumpfmuffe einen Kragen besitzen, mit dem sie unter die andere Schrumpfmuffen greifen kann oder auf der anderen Schrumpfmuffe aufliegen kann.

Vorzugsweise findet eine Klebeverbindung zwischen der Schrumpfmuffe und der Erdgasleitung bzw. mit der Abzweigung statt. Der Kunststoff der Schrumpfmuffe kann so gewählt werden, daß ohne Hilfsmittel eine Klebefähigkeit, ggfs. erst nach Erwärmung eine Klebefähigkeit entwickelt.
Vorzugsweise ist die Schrumpfmuffe innenseitig mit einer Kleberschicht versehen. Es handelt sich um einen Schmelzkleber.

Die einstückige Ausbildung ist günstig für einen Neubau von Erdgasleitungen.

Bei nachträglichem Anbringen einer Abzweigung kann die Anbringung einer Schrumpfmuffe einfacher werden, wenn die Schrumpfmuffe aus einem oder mehreren Teilen um die Abzweigung herum zusammen gesetzt wird. Die Schrumpfmuffe kann an den Nahtstellen verschweißt oder verklebt oder auch mechanisch verbunden werden. Darüber hinaus ist es von Vorteil, eine Verklebung der Schrumpfmuffen oder von Schrumpfmuffenteilen mit dem Stahlleitungsrohr bzw. mit dessen Isolierung oder eine Verklebung mit der Abzweigung bzw. mit dessen Isolierung vorzusehen. Durch die Verklebung werden die Schrumpfmuffen schließend zur Anlage an die korrosionsgefährdeten Flächen des Leitungsrohres gebracht. Dadurch wird die Luft an den Flächen des Leitungsrohres verdrängt, von der die Korrosionsgefahr ausgeht.

Für das Austreiben bzw. Verdrängen von Luft ist günstig, wenn die Schrumpfung nicht gleichzeitig überall sondern ausgehend von einer Stelle erfolgt; zum Beispiel von einem Muffen-Ende zum anderen Muffen-Ende hin. Vorzugsweise wird mittig mit der Schrumpfung begonnen und die Schrumpfung zu den Muffen-Enden geführt.

Die Schrumpfmuffenteile können Schlauchstücke und/oder Manschetten und/oder Hauben und/Kappen und/oder Stutzen oder dergleichen sein.

Wahlweise werden die Schrumpfmuffen noch zusätzlich durch bekannte Klebestreifen gesichert.

Die Schrumpfmuffe besteht vorzugsweise aus Polyethylen (PE) und/oder Polypropylen (PP) oder einer Kunststoffmischung mit wesentlichen PE- und/oder PP-Mischungsanteilen. Das Polyethylen besitzt eine vorzugsweise eine Dichte von mindestens 0.926 Gramm pro Kubikzentimeter. Das gleiche gilt für die das Polypropylen. Außerdem hat das Polyethylen vorzugsweise eine Mindestdicke von 1 mm im aufgeschrumpften Zustand und ist vorzugsweise an der Berührungsfläche mit dem Stahlrohr bzw. an der Berührungsfläche mit der Abzweigung verklebbar. Im weiteren wird nur auf PE Bezug genommen. Das schließt hier die alternative oder zusätzliche Verwendung von PP ein.

Die Klebefähigkeit kann sich auf Schrumpfmuffenteile beschränken. Wahlweise ist nur der mit dem Anschlußflansch bzw. Anschlußstutzen korrespondierende Schrumpfmuffenteil klebefähig.
Bei der Klebung kann ein zusätzlicher Kleber zum Einsatz kommen. Vorzugsweise ist die Schrumpfmuffe aber selbst klebend, insbesondere nach Erwärmung auf Schrumpftemperatur. Die Erwärmung erfolgt wahlweise mit Warmluft. Die Warmluft kann elektrisch oder durch Verbrennung oder mit einer anderen Heizeinreichtung erzeugt werden. Vorzugsweise wird eine offene Flamme an der Kunststoffisolierung vermieden. Die Erwärmung kann auch durch Strahlung oder durch Berührung mit anderen Heizmitteln erzeugt werden.

Die richtige Erwärmung wird vorzugsweise mit einer Temperaturanzeige kontrolliert. Besonders günstig sind Materialien, deren Farbe bei Erreichen der gewünschten Temperatur umschlägt. Vorzugsweise werden dabei organische Farbstoffe mit Großmolekülen verwendet. Dem liegt folgender Vorgang zugrunde:
Bei Erreichen der Temperaturgrenze in Anwesenheit von Sauerstoff wird das Großmolekül gespalten. Es entsteht ein Substitutionsprodukt mit anderen Farben. Solche
Temperaturgrenzen können z.B. bei 45 Grad Celsius oder 80 Grad Celsius liegen.
Die Farbänderungen erfolgen z.B. von gelb nach rot und violett oder von violett über grün nach gelb.
Solche organischen Farben sind wegen ihrer Instabilität sonst wirtschaftlich unbedeutend. Wahlweise findet eine instabile Farbschicht aus Anwendung, deren Instabilität bei 40 bis 80 Grad Celsius liegt.

Wahlweise besteht die instabile Farbschicht aus einem Polyisobuthylen. Je nach Beschaffenheit des Polyisobuthylens ist die Instabilitätstemperatur anders. Im wesentlichen ist dabei das Molekulargewicht (Mol-Gew) maßgebend. Das Molekulargewicht (auch als Molekularmasse bezeichnet) ist die Masse eines Moleküls, bezogen auf das Kohlenstoff-Isotop ¹²C. Vorzugsweise werden Mischungen mit mindestens einem Polyisobuthylen und einem Polyisobuthylen anderen Molekulargewichts verwendet. Dabei ist der Abstand beider Gewichte mindestens 10.000 D (Einheit Dalton), vorzugsweise mindestens 30.000 D und noch weiter bevorzugt mindestens 50.000 D. Dabei kann das eine Polyisobuthylen so gewählt werden, daß seine Instabilitätstemperatur unterhalb der Schrumpftemperatur liegt, während die andere Instabilitätstemperatur so ausgewählt werden kann. das seine Instabiltätstemperatur über der Schrumpftemperatur an der Grenze der Warmfestigkeit des PE liegt. Es kann auch ein Polyisobuthylen mit einer Instabilitätstemperatur gewählt werden, die anderen Funktionen genügt.

Wahlweise kann die Farbschicht zugleich eine Klebeschicht bilden.
Im Schadensfall kann die Muffe geöffnet und kontrolliert werden, ob die erforderlichen Temperaturen eingehalten worden sind und ob eine ausreichende Dichtwirkung entstanden ist. Bei Leckagen hat der Luftsauerstoff Zutritt zu dem Schmelzkleber. Desgleichen ist bei mangelnder Spülung ein Restsauerstoff im Bereich des Schmelzklebers vorhanden und kann in Reaktion mit dem Sauerstoff eine Farbänderung entstehen, welche die Undichtigkeit anzeigt. Hier ist die Auslegung der Instabilitätstemperatur auf die Schrumpfungstemperatur bzw. auf die Temperatur des Spülgases zweckmäßig.

Zum Beispiel entsteht eine Farbschicht, die zugleich Klebeschicht ist, durch Zumischung von Hartparaffin und Balsamharz. Eine geeignete Mischung kann swie folgt zusammengesetzt sein;
Polyisobuthylen (50.000 Mol.Gew) mit 30 bis 70 Gew%
Polyisobuthylen (10.000 Mol.Gew) mit 30 bis 55 Gew%
Hartparaffin (mit einem Schmelzpunkt von 80 Grad Celsius) mit 10 Gew%
Balsamharz (Kolophonium mit einem Schmelzpunkt von 105 Grad Celsius) mit 5 Gew%
Die oben beschriebenen Gew% beziehen sich auf die Gesamtmischung.

In der Mischung bildet das Hartparaffin ein Gleitmittel.
Das Balsamharz erhöht die Haftwirkung des Klebers.
Mit der oben beschriebenen Mischung lassen sich Haftwerte erreichen, wie sie in DIN-EN 10285 für einen 3-Schichtenschutz gefordert werden.

Im übrigen ist beim Setzen der Schrumpfmuffen von Vorteil, wenn der Innenraum zwischen Schrumpfmuffen und Stahlrohr bzw. Abzweigung vor dem Schrumpf evakuiert und/oder während des Schrumpfes mit einem Gas inertisiert wird.

Bevorzugtes Inertisierungsmittel ist trockenes Stickstoffgas. Vorzugsweise wird die Luft mit dem Inertgas bzw. Schutzgas ausgespült.
Durch Evakuieren und/oder Spülen wird verhindert, daß die Schrumpfmuffe Korrosionspartner des Stahles einschließt. Korrosionsgefahr geht dabei besonders von Luft aus.
Zur Kontrolle ausreichender Spülung kann in das auftretende Spülgas eine offene Flamme gehalten werden. Bei Erlöschen der Flamme kann von einer ausreichenden Spülung ausgegangen werden.

Das Inertisierungsmittel bzw. Spülgas kann auch genutzt werden, um Siliziumdioxid-Pulver und/oder Titandioxidpulver zwischen die EP-Schicht und die Kleberschicht der Schrumpfmuffe zu blasen und eine oben erläuterte vorteilhafte weitere Isolierungsschicht zu erzeugen.

Wahlweise wird der oben beschriebene Spülvorgang mit der Erwärmung der Schrumpfmuffe kombiniert. Dazu wird das Spütlgas vor dem Eindringen auf die Schrumpftemperatur erwärmt. Das kann z.B. mit Hilfe eines geeigneten, beheizten Wärmetauschers erfolgen, durch den das Spülgas hindurchgeleitet wird. Die Beheizung des Wärmetauschers kann wie oben beschrieben erfolgen.

Wahlweise wird die Schrumpfung gesteuert, so daß z.B. zuerst an den Muffenenden eine Schrumpfung einsetzt und die Schrumpfung sich dann zur Muffenmitte hin fortsetzt.
Oder es wird die Schrumpfung so gesteuert, daß die Schrumpfung erst in der Muffemitte einsetzt und sich dann zu den Muffen-Enden fortsetzt.
Oder es wird die Schrumpfung so gesteuert, daß sie an einem anderen Punkt einsetzt und sich in andere Richtungen fortsetzt.
Die Steuerung kann dadurch erleichtert werden, daß an der Schrumpfmuffe mehrere Zuleitungen und/oder mehrere Ableitungen für das erwärmte Spülgas vorgesehen sind, so daß das erwärmte Spülgas zunächst an den Stellen eingetragen werden kann, an denen der Schrumpfvorgang beginnen soll, und daß das erwärmte Spülmittel anschließend an den Stellen zugeleitet werden kann, an denen der Schrumpfvorgang mit Verzögerung einsetzen soll.
Günstig ist, wenn zu den verschiedenen Zuleitungen und/oder Ableitungen verschiedene Leitungen führen, in den Schieber angeordnet sind, mit denen eine schnelle und einfache Umleitung des erwärmten Spülgases stattfinden kann.

Die Steuerung des Schrumpfvorganges kann auch ganz oder teilweise durch unterschiedliche Erwärmung bzw. unterschiedlich warmes Spülgas bewirkt werden.

Bei einer Temperaturregelung an dem für die Erwärmung des Spülgases vorgesehenen Wärmetauscher kann die oben beschriebene Anwendung eines Temperaturanzeigers an der Schrumpfmuffe entbehrlich machen. Unabhängig davon behält das Farbmaterial als Dokumentation richtigen Schrumpfens eine wesentliche Bedeutung, wenn ein Farbmaterial verwendet wird, das nach Überschreiten der Instabilitätsgrenze nicht mehr die ursprüngliche Farbe annimmt, wenn es sich wieder abkühlt.

Zum Spülen sind entsprechende Eintrittsöffnung und Austrittsöffnungen an den Schrumpfmuffen vorgesehen. Die Öffnungen zum Spülen können an entfernten Stellen angeordnet sein. Die Öffnungen können auch in geringer Entfernung angeordnet werden. Vorzugsweise finden sich Eintrittsöffnung am untersten Umkehrpunkt bzw. an der Unterseite der Sehrumpfmuffe und die Austrittsöffnungen am höchsten Einbaupunkt bzw. am Scheitel der Schrumpfmuffe. Soweit die Abzweigung den höchsten Punkt oder untersten Punkt bildet, ist dort eine Austrittsöffnung bzw. eine Eintrittsöffnung an der Schrumpfmuffe vorgesehen.

Bei liegender Abzweigung sind die Öffnungen wahlweise an dem zur Abzweigung gehörigen Schrumpfmuffenteil und/oder an dem zur Erdgasleitung gehörigen Schrumpfmuffenteil vorgesehen.

Günstig ist, wenn durch den Schrumpf der Schrumpfmuffe und wahlweise durch zusätzliches Andrücken der Schrumpfmuffen bzw. Schrumpfmuffenteile das eingeschlossene Gas ausgetrieben wird. Durch Evakuieren der Schrumpfmuffe bzw. durch Evakuieren des Zwischenraumes zwischen der Schrumpfmuffe und dem Leitungsrohr bzw. des Zwischenraumes zwischen der Schrumpfmuffe und der Abzweigung kann der aus anstehende Luftdruck zum Andrücken genutzt werden. Ein durch Unterdruck von 0.7 bis 0.9 bar entstehender äußerer Druck bewirkt eine sichere Anlage der Schrumpfmuffe an der Abzweigung.

Vorteilhafterweise kann die Dichtwirkung der Schrumpfmuffe, insbesondere die Dichtwirkung an den Manschetten/Stutzen-Enden der Schrumpfmuffe durch fortdauerndes Anliegen eines Unterdruckes kontrolliert werden. Dabei kann von einer ausreichenden Dichtwirkung ausgegangen werden, wenn der anliegende Unterdruck sich ohne fortschreitende Saugung nicht mehr als ein zulässiges Maß verändert. Das zulässige Maß läßt sich mit wenigen Versuchen bestimmen.

Der Anschluß für die Spülgasleitung und/oder für das Evakuieren kann durch geeignete Rohrstutzen gebildet werden. Günstig sind Rohrstutzen an der Schrumpfmuffe, die eine Klemmverbindung oder auch eine Schraubverbindung erlauben. Solchermaßen vorbereitete Anschlüsse verkürzen die Arbeitszeit für die Schrumpfverbindung erheblich, so daß ihr baulicher Aufwand weit überkompensiert wird.

Für den Anschluß der Spülgasleitung können auch einfache Öffnungen an den Schrumpfmuffen vorgesehen sein. In die Öffnungen können die Spülgasleitungen gesteckt werden.
Desgleichen können die Evakuierungsleitungen mit geeigneten Öffnungen in den Schrumpfmuffen zusammen wirken.
Wahlweise handelt es sich bei den Öffnungen auch um Schlitze.

Nach dem Spülen und/oder Evakuieren werden die Stützen. Öffnungen und dergleichen geschlossen, um ein Eindringen von Korrosionspartnern zu verhindern.
Bei den beschriebenen Stutzen läßt sich ein Verschluß ebenso leicht und schnell bewirken wie beim Anschluß der Leitungen.
Bei den Öffnungen, auch bei den Schlitzen, sind vorzugsweise geeignete Lappen an den Schrumpfmuffen vorgesehen, mit denen sich die Öffnungen abdecken lassen. Die Lappen werden dann auf den Öffnungen verklebt oder verschweißt.
Mit den Lappen und Schlitzen entsteht an den Schrumpfmuffen eine Bauweise, die einem Briefverschluß ähnlich ist.

Vorzugsweise werden die Stutzen und die Schlitze vor dem Schließen mit einem Dichtmittel gefüllt. Besonders geeignete Dichtmittel sind dabei Kleber.

Die Qualität und Wirtschaftlichkeit bestimmen die Nachisolierung. In dem Rahmen sind Dichte und Erweichungspunkt des gewählten PE- oder PP der Stahlrohrisolierung maßgebend. Das gleiche gilt für die Aushärtungstemperatur und Aushärtungszeit des ausgewählten EP(Epoxyharz)-Pulvers in der Anwendung. Die Qualität des EP-Pulvers in der Glasübergangstemperatur ist für den vorgesehenen Einsatz entscheidend bzw. bestimmt den Unterrostungsweg an Schnitt- oder Verletzungskanten im EP und den damit verbundenen Widerstand gegen Streuströme und den Boden-Chemic-Angriff.
Die Qualität der Nachisolierung bestimmt die Nutzungszeit des gesamten Rohrsystems.

Über der EP-Schicht liegen die weiteren Schichten PE-Kleber und PE/PP bzw. anderen Thermoplasten. Als andere Thermoplaste kommen z.B. LDPE (PE geringer Dichte). MDPE und HDPE (PE hoher Dichte) in Betracht.

Aus dem Gesamtsystem ergibt sich die Dichtungswirkung der Isolierung gegen
Wasser, Sauerstoff und Kohlendioxid sowie gegen
Mechanische Belastungen aus Erdbewegungen, Grundwasser und Verkehrslasten.

Als besonders günstig haben sich EP-Pulver mit einem Aushärtungsbereich von 130 bis 200 Grad Celsius, vorzugsweise 160 bis 180 Grad Celsius, erwiesen. Die Aushärtungszeit verringert sich mit zunehmender Aushärtungstemperatur. Während bei 130 Grad Celsius noch mit 30 min Aushärtungszeit gerechnet werden kann, verringert sich die Aushärtungszeit bei 150 Grad Celsius Aushärtungstemperatur auf 10 min. Bei 160 Grad Celsius kann eine Aushärtungszeit von 5 min ausreichend sein, bei 180 Grad Celsius eine Aushärtungszeit von 2 min.

Die Nachisolierungslänge der Rohrverbindung beträgt bei obigen Beispielen vorzugsweise 100 mm bis 300 mm in axialer Richtung

Die Erfindung hat sich die Aufgabe gestellt, an einer oder mehreren Stellen oder an allen Stellen, an denen die Erwärmung erforderlich ist, eine vorteilhafte Erwärmung sicherzustellen. Das gilt insbesondere
für eine Erwärmung beim Vorbehandeln der Stahlrohre und/oder Auftragen weiterer Isolierungsschichten einschließlich dem Auftragen und/oder Aushärten des EP oder eines Substitutes und/oder dem Schrumpfen von Schrumpfmanschetten, wie auch
für das Abisolieren und
für das Nachisolieren.

Nach der Erfindung wird das mit den Merkmalen der Ansprüche erreicht. Nach der Erfindung wird die notwendige Erwärmung mit Hilfe von elektrisch beheizten Manschetten(Heizmanschette) oder elektrisch beheizten Matten (Heizmatte) erreicht. Die Heizmanschette und die Heizmatte werden um die zu beheizenden Rohrflächen gelegt. Vorteilhaft ist ein Formschluß mit den zu beheizenden Rohrflächen bzw. Isolierungsflächen, der Hohlräume verhindert und einen optimalen Wärmeübergang sichert.

Die Heizmanschetten bzw. Heizmatten sind vorzugsweise flexibel. Die Flexibilität erlaubt eine Anpassung auf unterschiedliche Rohrdurchmesser.

Zum Abisolieren gehört das (ganz oder teilweise) Durchschneiden des Kunststoffmantels und das Abziehen des Kunststoffmantels. Wie oben ausgeführt, ist es für das Nachisolieren von großem Vorteil, wenn die vorhandene EP-Schicht nicht durchschnitten, sogar nicht einmal eingeschnitten wird. Je nach Verfahrensweise wird beim Durchschneiden ein Span aus dem Kunststoffmantel herausgeschnitten.
Es zeigt sich, daß die Schnittqualität und der zum Durchschneiden erforderliche Aufwand wesentlich durch die Temperatur des Kunststoffmantels bestimmt werden. Die optimale Temperatur läßt sich mit einigen Versuchen annähernd bestimmen. Bei einem PE-Mantel kann die richtige Temperatur auch zwischen 50 und 80 Grad Celsius liegen. Bei der Verwendung anderer Kunststoffe ergibt sich ein vergleichbarer Bereich mit anderen Temperaturgrenzen, zwischen denen die richtige Temperatur zum Schneiden bzw. Schälen gewählt wird.

Die Heizmanschetten oder Heizmatten werden zum Abisolieren der Rohrisolierung um die abzuisolierenden Rohrstellen gelegt und mit Strom beaufschlagt, so daß eine gewünschte Erwärmung entsteht. Vorteilhafterweise lassen sich die Heizmanschetten und Heizmatten so genau plazieren, daß eine flächengenaue Erwärmung der zu entfernenden Rohrisolierung startfindet. Die zum Abziehen der Rohrisolierung günstige Temperatur liegt zum Beispiel in der Anwendung auf PE zwischen 50 und 80 Grad Celsius, vorzugsweise bei 70 Grad Celsius plus/minus 10 Grad Celsius. Bei der Verwendung anderer Kunststoffe ergibt sich ein vergleichbarer Bereich mit anderen Temperaturgrenzen, zwischen denen die richtige Temperatur zum Schneiden bzw. Schälen gewählt wird.

Die Anwendung der Heizmanschetten und Heizmatten ist vorzugsweise dann zum Abisolieren vorgesehen, wenn das isolierte Rohr keine ausreichende Temperatur mehr aus dem Isolierungsvorgang hat. Das ist insbesondere der Fall, wenn die Rohre nach zum Teil langer Lagerung im Rohrgraben verlegt werden und die Rohre dabei abgelängt und an den neu entstandenen Rohrenden verbunden werden müssen.

Das Abisolieren kann aber auch am Ende eines Isolierungsvorganges vorkommen, wenn das Rohr auch an den Rohrenden eine Isolierung trägt. Um die Rohrenden für eine Verbindung mit anderen Rohrenden vorzubereiten, ist ein Abisolieren an den Rohrenden erforderlich.
Dabei finder ein oben beschriebenes Abschälen der Isolierung statt. Für dieses Abschälen kann die Restwärme aus dem Isolierungsvorgang genutzt werden, wenn das Abisolieren zeitig nach der Fertigstellung der Isolierung erfolgt. Das für das Abisolieren zur Verfügung stehende Zeitfenster kann je Umfang des Wärmeinhaltes des Rohres und seiner Isolierung bis zu 100 min betragen. Mindestens ist das Zeitfenster 10 min geöffnet.
Das Zeitfenster ist um so größer, je größer der Wärmeinhalt ist. Mit Wärmeinhalt ist die Temperaturdifferenz zwischen der oben beschriebenen Mindesttemperatur und der tatsächlichen Temperatur gekennzeichnet, die üblicherweise nach der Isolierung höchstens 100 Grad Celsius beträgt. Bei Überschreiten dieser Zeitgrenze/Zeitfenster ist eine zu geringe Temperatur zu erwarten. Obige Angaben zu dem Zeitfenster beziehen sich auf eine Abkühlung der isolierten Stahlrohre an der Umgebungsluft. Die Abkühlung an der Umgebungsluft kennzeichnet die Abkühlungsgeschwindigkeit und die Zeit bis zum Unterschreiten der vorgesehenen Mindesttemperatur zur Erleichterung des Schälvorganges. Durch Änderung der Umgebung, zum Beispiel durch Lagerung der isolierten Rohre in einer Wärmekammer kann das Zeitfenster vergrößert werden. Der Fachmann wird an eine eingeschränkte Abkühlung nicht denken, weil bisher eine rasche Abkühlung angestrebt wird, um möglichst schnell zu einer uneingeschränkten Lagerfähigkeit der Rohre zu kommen, die erst nach ausreichender Abkühlung der Rohre entsteht.

Die erfindungsgemäße Heizmannschette wird hilfreich, wenn die Rohre nach der Isolierung so weit abgekühlt sind, daß eine erneute Erwärmung der Isolierung für das Abschälen wirtschaftich von Vorteil ist.

Die Erwärmung der Heizmanschetten oder Heizmatten kann durch Regelung der Stromzufuhr beliebig gesteuert werden. Dabei ist es möglich, der Stromzuführung einen immer gleichen Verlauf zu geben. Es ist auch möglich, die Stromzuführung ganz oder teilweise nach dem Temperaturverlauf an der Rohrisolierung oder in der Heizmanschette oder Heizmatte zu steuern. Das geschieht vorzugsweise mit Hilfe eines Temperaturmeßgerätes, mit dem die jeweils vorhandene Temperatur gemessen wird.
Wahlweise sind auch Heizmanschetten oder Heizmatten mit mehreren stromdurchflossenen Heizleitungen vorgesehen, die sich nicht nur gemeinsam, sondern auch einzeln oder in Gruppen zu oder abschalten lassen. Durch Zu- oder Abschalten wird die Heizleistung von dem Temperaturverlauf in der Heizmatte oder an der zu entfernenden Rohrisolierung verändert. Das geschieht wahlweise automatisch.
Vorzugsweise wird für die gewünschte Erwärmung der zu entfernenden Rohrisolierung eine Heizleistung bis 0.3 Watt pro Quadrameter, noch weiter bevorzugt bis 0.2 Watt pro Quadratzentimeter zur Anwendung gebracht. Die Heizleistung hat auch auf die Erwärmungsdauer Einfluß.

Beim Auftragen der EP-Schicht ist eine Erwärmung der EP-Schicht nach dem Auftragen zu deren Aushärten erforderlich. Dabei kann die Erwärmung mittels der erfindungsgemäßen Heizmanschetten oder Heizmatten erfolgen.

Das Aushärten der EP-Schicht kann vor dem Aufbringen der oben erläuterten Kleberschicht von außen mittels der Heizmanschetten oder Heizmatten erfolgen.
Die Erwärmung zum Aushärten kann auch von außen erfolgen, wenn auf eine erste EP-Schicht zunächst ein Kleber und dann auf die Kleberschicht eine weitere EP-Schicht aufgebracht worden ist und wenn die Heizmanschetten bzw. Heizmatten dann außen auf den weiteren Schichten aufliegen. Dann soll die Wärme durch die außen liegenden Schichten und die Kleberschicht in die innen liegende EP-Schicht fließen. Für das Aushärten der EP-Schicht können unterschiedliche Temperaturen Anwendung finden. Nach dem älteren Vorschlag kann eine Erwärmung zwischen 130 und 200 Grad Celsius mit unterschiedlicher Dauer Anwendung finden. Je höher die Temperatur ist, desto kürzer soll die Dauer der Wärmebehandlung sein. Dabei kann die Behandlungsdauer zwischen 30min und 2 min liegen.

Im Prinzip können für das Aushärten der EP-Schichten gleichartige Heizmanschetten und Heizmatten wie beim Abisolieren Anwendung finden. Allerdings ist es vor allem für die höheren Behandlungstemperaturen zweckmäßig, wenn die Heizmanschetten und Heizmatten dazu eine größere Heizleistung besitzen. Vorzugsweise ist eine Heizleistung bis 0.7 Watt pro Quadratzentimeter vorgesehen, noch weiter bevorzugt eine Heizleistung von 0.4 bis 0.6 Watt pro Quadratzentimeter.
Günstig ist, wenn die für das Aushärten von EP vorgesehenen Heizmanschetten und Heizmatten auch mit geringerer Leistung für das Abisolieren betrieben werden können.

Im übrigen ist die Erwärmung der EP-Schicht besonders gleichmäßig, wenn sie durch andere Schichten hindurch erfolgt. Die zusätzlichen Schichten führen zu einer Vergleichmäßigung des Wärmeflusses und zu einer Vergleichmäßigung der Aushärtung. Darüber hinaus führt die Vergleichmäßigung der Schmelzklebertemperatur zu einer Verbesserung der Reaktionsfähigkeit zwischen Kleber und EP-Schichten. Das gilt auch im Falle der Verwendung von Buthylkautschuk-Kleber.
Bei der Verwendung von EP für die Rohrisolierung ist die Heizmanschette auf die für das Aushärten des EP notwendige Temperatur und Zeit ausgelegt. Vorzugsweise ist ein einstellbarer Temperaturbereich und/oder Zeitbereich vorgesehen.

Bei Verwendung eines temperaturempfindlichen Klebers ist die Heizmanschette auf die zulässige Temperatur des Klebers ausgelegt. Vorzugsweise ist ein einstellbarer Temperaturbereich vorgesehen. Der Einstellbereich beträgt wahlweise für Copolymerisat-Kleber plus 40 Grad Celsius bis 165 Grad Celsius.
Vorzugsweise ist auch eine einstellbare Vorwärmzeit vorgesehen. Der Umfang des Einstellbereiches entspricht der notwendigen Behandlungsdauer. Die notwendige Behandlungsdauer beträgt zum Beispiel weniger als 20 min.

Ein anderer Anwendungsfall für die Heizmanschetten und Heizmatten wird durch die Schrumpfmuffe gebildet. Wie oben erläutert setzt der Schrumpf bei einer Wärmebehandlung ein.

Wahlweise finden Heizmanschetten und Heizmatten auch für das Schrumpfen der Schrumpfmuffe Anwendung. Die Schrumpftemperatur liegt dabei zum Beispiel zwischen 110 und 160 Grad. Mit Hilfe der Heizmanschetten oder Heizmatten wird die für das Schrumpfen erforderliche Wärme geliefert. Das geschicht wahlweise im Zusammenwirken mit der oben beschriebenen Gasbeaufschlagung des Schrumpfmuffen-Inneren. Wahlweise finder die Erwärmung auch allein mit den Heizmanschetten oder Heizmatten start. Die Beheizungstemperatur der Heizmanschetten oder Heizmatten liegt vorzugsweise am Anfang des Schrumpfvorganges um einiges über der vorgesehenen Schrumpftemperatur, um in wirtschaftlicher Kürze auf Schrumpftemperatur zu kommen. Danach kann die Beheizung reduziert werden auf ein Maß, bei dem der Wärmeverlust in der Schrumpfmanschette durch die Beheizung kompensiert werden, so daß die erreichte Schrumpftemperatur für die notwendige Schrumpfdauer erhalten bleibt.

Überraschender Weise zeigt sich, daß eine kurzzeitige höhere Wärmebelastung die Qualität der Schrumpfmuffe nicht beeinträchtigt.

Die richtige Temperatur läßt sich mit Temperaturfühlern messen und steuern.

Wahlweise kann die zum Aushärten der EP-Schichten erforderliche Erwärmung auch mittels der außen an der Schrumpfmuffe anliegenden Heizmanschette oder Heizmatte hindurch und auch durch andere beschriebene Siliziumdioxidschichten und/oder Titandioxidschichten hindurch erfolgen. Das schließt auch ein Überschreiten der Schrumpftemperatur ein.

Für die unterschiedlichen Anwendungsfälle ist die Verwendung von gemeinsamen Heizmanschetten oder Heizmatten von Vorteil. Dies ist möglich, wenn die Heizmanschetten oder Heizmatten auf höhere Leistungen umschaltbar sind. Mit dem Schalter kann die Stromzufuhr geregelt werden. Wahlweise besitzen die Heizmanschetten oder Heizmatten auch mehrere Heizelemente, welche zugeschalter oder abgeschaltet werden. Als Heizelemente sind Heizdrähte bekannt, die in als Heizschlangen verlegt werden. Üblicherweise sind die Heizdrähte eingängig verlegt. Nach der Erfindung sind mehrgängig verlegte Heizdrähte vorgesehen, die sich einzeln leicht zu oder abschalten lassen. Die mehrgängige Verlegung entsteht dadurch, daß mehrere nebeneinander liegende Heizdrähte gemeinsam und unter Einhaltung eines ausreichenden Abstandes voneinander in eine Schlangenform gebracht werden.
Günstig kann auch sein, Heizdrähte in Abschnitten zu verlegen, so daß eine abschnittsweise Steuerung der Heizmanschetten oder Heizmatten möglich wird. Das läßt sich nutzen, um den Schrumpfvorgang zu beeinflussen, um z.B. den Schrumpfvorgang zunächst in der Mitte der Verbindung zu beginnen und dann nach außen fortzusetzen. Nach diesem Konzept kann die Erwärmung auch an anderer Stelle beginnen und weitergeführt werden.

Im übrigen kann mit der Länge der Heizmanschette bzw. Heizmatte auf den jeweiligen Erwärmungsvorgang Einfluß genommen werden.

Vorzugsweise finden für die Nachisolierung Heizmanschetten und Heizmatten mit einer Länge Verwendung, die es erlaubt, mindestens verschiedene vorkommende Schrumpfmanschettenlängen abzudecken, Kürzeren Schrumpfmanschettenlängen kann dabei durch Abschalten von entsprechenden Heizabschnitten in der Heizmanschette bzw. Heizmatte Rechnung getragen werden.
Eine weitere Abschaltung kann stattfinden, wenn an den Rohrenden ein Abisolieren zum Verbinden der Rohrenden vorgesehen ist. Dann ist nur ein Bruchteil der Heizlänge erforderlich, die für eine Schrumpfmuffe verfügbar sein muß.

Vorzugsweise umfasst die Heizmanschette bzw. die Heizmatte zugleich alle Rohre in einem Arbeitsbereich eines Verlegers. Das heißt für den Rohrverleger in einem Stadtrohrnetz umfasst die Heizmanschettenlänge bwz. Heizmattenlänge alle dort vorkommenden Schrumpfmanschettenlängen. Die Anpassung der Heizmanschette bzw. Heizmatte auf aktuelle Schrumpfmuffenlängen erfolgt durch oben beschriebenes Umschalten der Heizmanschette bzw. Heizmatte. Mit dieser Möglichkeit zum Umschalten wird die Vorhaltung mehrerer Heizmanschetten bzw. Heizmatten entbehrlich.
Im Arbeitsbereich der Großrohre für Überlandleitungen umfasst die Heizmanschettenlänge bzw. Heizmattenlänge vorzugsweise alle dort vorkommenden Schrumpfmanschettenlängen.

Die Anpassung der Heizmanschette bzw. Heizmatte auf die Schrumpfmanschettenlänge ist nur eins der sich stellenden Probleme. Ein weiteres Problem sind die unterschiedlichen Durchmesser der Schrumpfmuffen. Vorzugsweise findet das oben erläuterte Längenprinzip auch auf die unterschiedlichen Durchmesser Anwendung. Das heißt, die Heizmanschetten und Heizmatten sind so ausgelegt, daß in einem oben erläuterten Arbeitsbereich alle Schrumpfmanschetten mit einer Heizmanschette bzw. Heizmatte geschrumpft werden können. Soweit das Heizmanschettenumfangsmaß bzw. das Heizmattenumfangsmaß das Umfangsmaß einer Schrumpfmuffe übersteigen, ist vorzugsweise ein Abschalten der Heizung in dem überstehenden Rand vorgesehen.
Umkehrt können Teile der Heizmanschette bzw. Heizmatte zugeschaltet, wenn eine Heizmanschette bzw. Heizmatte von einer kleineren Schrumpfmanschette auf eine größere Schrumpfmanschette gewechselt werden muß. Dabei kann sich das "größer" auf eine größere Schrumpfmuffenlänge und/oder einen größeren Schrumpfmuffenumfang beziehen.

Hinter dem Konzept des Zuschaltens oder Abschaltens steht die Überlegung, daß sich das Zuschalten und Abschalten von Teilen der Heizeinrichtung elektrotechnisch einfacher darstellen lässt als das Anwenden unterschiedlicher Heizmanschetten bzw. Heizmatten für unterschiedliche Schrumpfmuffen.

Vorzugsweise ist für die Bedienung der Heizmanschette oder Heizmatte ein Schalter vorgesehen. Der Schalter besitzt für jede oben beschriebene Betriebsweise eine Schaltstellung. Die Schaltstellungen sind vorzugsweise:
Erwärmung zum Durchschneiden der Rohrisolierung
Erwärmung zum Abziehen der Rohrisolierung
Erwärmen zum Schrumpfen der Manschette
Erwärmen zum Aushärten von EP

Wahlweise besitzt der Schalter auch eine Zeitsperre, die auf das jeweilige Material einstellbar ist und ein Weiterschalten verhindert, wenn die notwendige Dauer der Wärmebehandlung noch nicht erreicht ist. Das kann kombiniert sein mit einer Zeitanzeige, die den Bedienungsleuten optisch und/oder akustisch eine Information über den Stand der Wärmebehandlung gibt.

Wahlweise besitzt die Steuerung auch eine Drucksperre und/oder Druckanzeige für die unten erläuterten Zwecke.

Wahlweise ist der Schalter auch als Datenspeicher ausgebildet oder mit einem Datenspeicher verbunden, so daß die verschiedenen Wärmebehandlungen und/oder Druckbehandlungen abrufbar sind bzw. kontrollierbar sind.

Wahlweise sind Rohrverbindungen und Abzweigungen auch mit einem Speicherchip versehen, der zusätzliche Informationen über deren Lage liefern und gegebenenfalls die Einzelheiten der Nachisolierung speichern kann.

Wahlweise kann anstelle einer für mehrere Schrumpfmuffen geeigneten Heizmanschette oder Heizmatte auch ein modularer Aufbau von Heizmanschetten und Heizmatten gewählt werden. Dazu eignen sich gleiche und unterschiedliche Module, die sich miteinander verbinden/kombinieren lassen. In der Verbindung entsteht jeweils eine angepasste neue Heizmanschetteneinheit bzw. Heizmatteneinheit.
Die Verbindung kann eine leicht herzustellende und wieder lösbare Steckverbindung sein, bei der die Stromzuführung über die Steckverbindung erfolgt. Dies kann genutzt werden, um die Moduleinheiten aus einer einzigen Stromquelle mit Strom zu beaufschlagen.

Wahlweise kann die Steckverbindung zugleich genutzt werden, um eine Verbindung zu einer gemeinsamen Steuerung für alle Module herzustellen.

Die Verbindung kann sich auch darauf beschränken, daß lediglich eine mechanische Verbindung zwischen den Modulen erfolgt. Dann ist vorzugsweise jedem Modul eine eigene Stromquelle zugeordnet.

Es sind auch Module denkbar, welche ohne mechanische Verbindung neben einander angeordnet werden, um in Anpassung an bestimmte Schrumpfmuffen eine bestimmte Modulkombination zu erzielen. Auch dadurch kann ein erheblicher Rationalisierungseffekt gegenüber einem Betrieb mit jeweils einer separaten Heizmanschette bzw. Heizmatte erzielt werden. Das gilt besonders für die Investition und den Erhaltungs- und Erneuerungsaufwand.

Wie oben erläutert, können die Module einzeln oder zu mehreren miteinander kombiniert werden. Oder es können aus einer Kombination Module entfernt werden.

Vorzugsweise sind die Heizmanschetten und Heizmatten mit einem wasserabweisenden, noch weiter bevorzugt mit einem wasserdichten, aber dampfdiffisionsoffenen Mantel versehen. Dazu eignet sich zum Beispiel ein Kunststoff-Faser-Gewirke oder Gewebe. Die Diffusionsoffenheit gewährleistet, daß eingeschlossene Feuchtigkeit entweichen kann. Andernfalls würde daraus Dampf entstehen, der an der falschen Stelle zu einer beträchtlichen Betriebsstörung führen würde.

Günstig ist eine Erwärmung, mit der eine auf dem Rohr bzw. auf einer Rohrschicht vorhandene Feuchtigkeit zum Verdampfen gebracht wird. Je höher die Temperatur ist, desto leichter verdampft eine vorhandene Feuchtigkeit. Die Feuchtigkeit kann aus einer Vorbehandlung der Rohroberfläche resultieren oder aus kondensiertem Dampf entstehen oder andere Gründe haben. Die Feuchtigkeit kann gemessen werden. Mit Hilfe eines in die Steuerung eingeschlossenen Rechenprogrammes kann die Verdampfung gesteuert werden. Das Rechenprogramm bestimmt dann die Verdampfungstemperatur und die Verdampfungsdauer.
In das Rechenprogramm können dabei wahlweise ganz oder teilweise auch alle Materialien eingegeben werden, die bei dem Rohr vorkommen. Das gilt für den Stahl, EP, PE, Kleber und anderes wie zum Beispiel die Schrumpfmuffe. Das gilt auch für die Dicke der Schichten. Mit dem Rechenprogramm lassen sich auch andere Vorgänge mit Hilfe des Rechners steuern. Das gilt für die Temperatur, einschließlich Temperaturverlauf, wie auch für die Erwärmungsdauer.

Wahlweise wird die Feuchtigkeit auch fortlaufend oder intermittierend gemessen und erfolgt solange eine zur Wasserverdampfung bestimmte Erwärmung, bis die Messung eine ausreichende Trocknung zeigt.

Wahlweise wird immer eine gewisse Feuchtigkeit unterstellt, die zu verdampfen ist. Dadurch ist eine Feuchtigkeitsmessung enthehrlich. Dies lässt sich erreichen, indem in dem möglichen Rahmen eine bestimmte Beheizungsdauer und eine bestimmte Beheizungstemperature gewählt werden. Der Rahmen wird durch die Parameter des jeweiligen Behandlungsvorganges gesetzt. Als Behandlungsvorgänge sind die beschriebene Oberflächenbehandlung, Aushärtung usw. anzusehen. Die Parameter sind die Temperatur, der Temperaturverlauf und die Beheizungsdauer. Zum Beispiel kann die Beheizungsdauer 20min bei maximaler Temperaturbelastung betragen.

Die erfindungsgemäßen Gewirke und Gewebe der Heizmanschetten und Heizmatten sind entsprechend warmfest ausgelegt. Wahlweise wird das durch Fluorcarbonate erreicht. Dabei liegt Warmfestigkeitsgrenze von PF-EP bei 200 Grad Celsius und von PT-FE bei 250 Grad Celsius.

Günstig ist außerdem ein Trennmittel zwischen der Heizmanschette bzw. Heizmatte und einer gegenüberliegenden PE-Oberfläche. Das Trennmittel kann zum Beispiel ein Pergamentpapier oder ein Ölpapier sein. Das Trennmittel verhindert ein Kleben der Heizmanschette oder Heizmatte an der PE-Oberfläche.

Die Heizmanschetten und Heizmatten werden um die Rohrleitungen bzw. die zu erwärmenden Schichten herumgelegt und angedrückt. Dabei ergeben sich einfache Situationen, wenn lediglich Rohrenden miteinander zu verbinden sind.

In solchen Fällen können die Heizmanschetten und Heizmatten mit einem Band sehr vorteilhaft gegen die zu erwärmenden Flächen gedrückt werden. Das Band ist entbehrlich. wenn die Heizmanschetten und Heizmatten aus sich heraus eine ausreichende Spannkraft besitzen. Das ist der Fall, wenn der oben beschriebene Mantel ausreichend fest ist, insbesondere aus festen Gewebe besteht. Dann eignet sich zum Beispiel ein Klettverschluß zur Befestigung von Heizmanschette oder Heizmatte.

Der Klettverschluß kann zusammen mit der Elastizität der Manschette oder der Matte auch einen Druck aufbringen. Art und Umfang des Druckes hängen dabei vom Geschick der Bedienungsleute ab. Der Druck lässt sich besser mit aufblasbaren oder aufpumpbaren Matten und Manschetten regeln oder mit Hilfe eines oder mehrerer aufblasbarer oder aufpumpbarer Druckschläuche regeln.
Die aufblasbaren oder aufpumpbaren Manschetten und Matten entstehen zum Beispiel dadurch, daß Schläuche mit den Manschetten oder Matten verbunden sind. Es kann auch eine einstücke Herstellung der Matten und Manschetten und Schläuche erfolgen.
Die Schläuche bilden in der Anwendung auf die Rohre ringförmige Kammern um die Rohre. Wahlweise werden mehrere solcher Schläuche in axialer Richtung der Rohre hintereinander angeordnet. Dann entstehen hintereinander angeordnete Kammern. Durch unterschiedliche Druckbeaufschlagung der Kammern mit Druckmittel lässt sich der Druck nach Belieben steuern.
Der Druckverlauf kann dem Temperaturverlauf und/oder im Falle der Schrumpfung dem Verlauf der Schrumpfung angepasst werden.
Der Druck steigert in bemerkenswerter Weise die Qualität der Isolierung.
Die Steuerung des Druckes kann auch genutzt werden, um in oben beschriebener Weise Luft- oder Gaseinschlüsse zu verhindern.
Als Druckmittel findet vorzugsweise Druckluft Verwendung. Es kann auch eine Flüssigkeit als Druckmittel Anwendung finden. Die Druckluft ist überdies umweltfreundlich.

Wahlweise besehen die Druckschläuche aus einem armierten Butylkautschuk. Als Armierung eignen sich Gewebeummantelungen. Solche Schläuche werden üblicherweise von den Feuerwehren genutzt. Deren Schläuche müssen auch druckfest und warmfest sein.

Die Druckschläuche können auch eine Konstruktion wie Schläuche und Kompressoren bei der Blutdruckmessung besitzen.

Schwierigkeiten können sich an Abzweigungen und Sonderformen ergeben, es sei denn die Abzweigungen und Sonderformen werden durch Sonderbauteile gebildet, die an den Verbindungsstellen mit dem übrigen Rohr eine Geradeausverbindung beinhalten, wie sie oben beschriehen sind.
Wo durch Abzweigungen und Sonderformen die zuvor beschriebenen einfachen Muffen keine Anwendung finden können, kann eine Anwendung von Schrumpfmaterial in der Form von Bahnen oder in Sonderbauformen notwendig werden. Das ist regelmäßig der Fall, wenn zum Beispiel Abzweigungen im Rohrgraben oder am Rohrgraben aus einzelnen Rohrstücken zusammen gesetzt werden.
In solchen Fällen wird die Form der Heizmanschette oder Heizmatte angepasst. Die Anpassung wird durch mehrstückige Ausbildung bzw. durch Module erleichtert, die zu Sonderformen zusammen gesetzt werden.

### Für alle einfachen und besonderen Formen gilt:

Wahlweise ist die nachgiebige Wärmeübertragungs-Schicht auch Bestandteil der Heizmanschette oder Heizmatte.
Wesentlich an der nachgiebigen Wärmeübertragungs-Schicht ist, daß durch die Schicht eine Hohlraumbildung zwischen der Heizmanschette oder Heizmatte und den zu erwärmenden Flächen verhindert wird. Die nachgiebige Wärmeübertragungs-Schicht gewährleistet ausreichenden Formschluß zwischen der Heizmanschette bzw. Heizmatte und den zu erwärmenden Flächen.

Wahlweise kann eine Anpressung der Heizmanschette oder Heizmatte an die zu erwärmenden Flächen allein den Zweck verfolgen, einen Formschluß und damit günstige Wärmeübergangsbedingungen sicherzustellen.
Dazu ist vorzugsweise wiederum eine Schlauchkonstruktion vorgesehen. Der Schlauch besteht aus einem ausreichend dichten Material zum Aufpumpen. Geeignete Materiallen für den Schlauch können z.B. aus Kunststoff bestehen.
Entweder wird dazu ein warmfester Kunststoff ausgewählt. Oder es wird der Kunststoff mit einer Wärmeisolierung gegen eine unzulässige Erwärmung geschützt. Von Vorteil ist, wenn der Schlauch an der Seite, welche der Schrumpfmuffe abgewandt ist, an einer wesentlichen Auswölbung gehindert wird und wenn die Auswölbung im wesentlichen schrumpfmuffenseitig vorgesehen ist. Die Auswölbung läßt sich durch geeignete Schnitte des Schlauches und/oder durch Kombination mit anderen Materialschichten wie z.B. Geweben erreichen, welche nur eine geringe oder eine unwesentliche Dehnung erlauben.

Für das Aufblasen der Schläuche eignen sich Kleinkompressoren.
Dabei können Schläuche und Kompressoren Anwendung finden, wie sie von der Blutdruckmessung bekannt sind. Solche Schläuche können Anwendung finden, wenn sie entsprechend dem Umfang der zu erwärmenden Fläche verlängert werden und wenn heizmanschettenseitigen bzw. heizmattenseitig eine ausreichende Isolierung angeordnet wird. Vorteilhafterweise haben derartige Schläuche auch eine geeignete Verbindung an den Enden, bei der Blutdruckmessung üblicherweise einen Klettverschluß. Vorteilhaft ist für die Anwendung darüber hinaus der elektrische Antrieb des Kompressors und seine elektrische Steuerung. Diese Steuerung läßt sich verhältnismäßig einfach auf die Steuerung des Heizbetriebes erweitern.

Die Kompressoren verfügen zwar regelmäßig über ein Sicherheitsventil, nicht aber über ein gesteuertes Ventil. Das Sicherheitsventil soll eine Explosion bzw. eine Beschädigung des Kompressors bei Überdruck im Druckluftkreis verhindern.
Nach der Erfindung ist wahlweise ein zusätzliches steuerbares Ventil in dem Druckluftkreis des Kompressors vorgesehen. Damit kann nach Belieben wieder Druck abgelassen werden bzw. unabhängig vom Sicherheitsventil ein Druck eingestellt werden.
Wahlweise werden die oben beschriebenen beiden Ventil auch baulich in einem Gehäuse vereinigt. Dann entsteht ein Ventil mit mehreren Funktionen.

Günstig kann es sein, die Heizmanschette bzw. Heizmatte mehrteilig auszubilden, nämlich aus einem separat montierbaren Teil mit den oben beschriebenen Heizdrähten und einem separat darüber montierbaren, aufblasbaren Teil. Dabei kann der mir den Heizdrähten versehene Teil in einfacher Weise außen mit einer Wärmeisolierung versehen werden, mit der der aufblasbare Teil vor einer unzulässigen Wärmebelastung geschützt wird. Trotz der separaten Teile ist eine gemeinsame Steuerung möglich, indem die Steuerung des aufblasbaren Teiles und der andere Teil mit einer Steckverbindung versehen sind.
Die Zusammensetzung der erfindungsgemäßen Heizmanschette und Heizmatte aus einem aufblasbaren Teil und einem mit Heizdrähten versehenen Teil eröffnet die Möglichkeit zur Verwendung eines gemeinsamen aufblasbaren Teiles für alle Rohrdurchmesser in Kombination mit anderen Teilen die genau auf den jeweiligen Rohrdurchmesser ausgelegt sind.
Der außen vorgesehene Druck verbessert die Qualität der Nachisolierung ganz erheblich.

Der Druck kann bis 0,3 bar, vorzugsweise bis 0,6 bar und noch weiter bevorzugt 0,9 bar betragen.

In der Zeichnung ist ein Ausführungsbeispiel der Erfindung dargestellt.

Fig.5 zeigt im Ausschnitt eine Erdgasleitung 200 aus Stahlrohr mit einer Kunststoffisolierung.

Die Fig. 5 zeigt darüber hinaus an einem der Rohrenden eine Heizmatte 201. Die Heizmatte 201 besteht aus einer mit Strom beaufschlagbaren Heizschlange 202, die von einem Gewebemantel umgeben ist. Der Gewebemantel ist wasserdicht, aber zugleich diffusionsoffen. Solche Gewebe sind zum Beispiel unter der Marke Geotex bekannt. In der Ausgangslage hat die Heizmatte 202 im Ausführungsbeispiel eine Rechteckform,
Im Ausführungsbeispiel ist die Länge der Heizmatte dem Rohrumfang so angepaßt, daß die Mattenenden auf dem Rohr aneinander stoßen. Gleichwohl findet eine Überlappung mit einem Klettverschluß statt. Die Situation ist in der Fig. 10 dargestellt. Die Mattenenden tragen die Bezeichnungen 205 und 206. Das Rohr und seine Isolierung sind im Ausschnitt dargestellt und tragen die Bezeichnung 203. Der Klettverschluß besteht aus zwei Geweben, die sich ineinander verhaken, wenn sie gegeneinander gedrückt werden. Von den beiden Geweben befindet sich der Teil 207 an dem Mattenende 204 und das überlappende andere Gewebe 206 an dem Mattenende 205.

Nach Fig. 11 werden die Matten mit drei nebeneinander liegenden Druckschläuchen 212,213, 214 überspannt. Die Heizmatte ist in Fig. 7 mit 211 bezeichnet, das die Isolierung tragende Rohr mit 210. Die Druckschläuche sind im Ausführungsbeispiel der Heizmatte nachgebildet. Das heißt, deren Enden stoßen gegeneinander und werden mit einem Klettverschluß zusammen gehalten, wie das in Fig. 6 dargestellt ist. Die Druckschläuche werden mit Druckluft gespannt.

Nach Fig. 12 sind die Heizmatten 231, 232 und 233 und die Druckluftschläuche 221, 222 und 223 mit einer gemeinsamen Steuerung 220 versehen. Die Steuerung wirkt unmittelbar auf den Stromzufluß zu den Heizmatten 231, 232 und 233.

Die Steuerung wirkt überdies auf Ventile 225, 226 und 227 in den Druckleitungen 228, 229 und 230 zu den Druckschläuchen 221, 222 und 223 sowie auf einen Kompressor 224 zur Erzeugung der Druckluft.

Das Abisolieren und Nachisolieren mit der Heizmatte ist unten erläutert.

Die Einzelheiten der Kunststoffisolierung sind in Fig.6 dargestellt. Dort ist das Stahlrohr mit 1 bezeichnet, die Kunststoffisolierung mit 3. Die Kunststoffisolierung 3 besteht aus einer Schicht 3a aus PE und aus einer Schicht 3b aus Epoxyharz/Epoxidharz (EP) innen am Stahl und einer Hartkleberschicht 3c.

Fig.7 zeigt eine Rohrstelle A für eine Abzweigung. Vor dem Abzweigen ist an dem Rohr an der Abzweigstelle A umlaufend auf einer Länge von 300m, beiderseits der Abzweigstelle 150mm, die Kunststoffisolierung mit einem Schrägschnitt unter einem Winkel von 30 Grad bis auf die EP-Schicht durchtrennt worden und abgeschält worden. Die Verfahrensweise entspricht der Verfahrensweise, wie sie in der EP 213061 beschrieben ist. Anschließend ist die dadurch frei liegende EP-Schicht an jedem Rohrende auf einer Rohrlänge von jeweils 150mm entfernt worden. Für eine Abzweigung wird auf die frei gelegten Rohrmantelflächen ein Rohrstutzen aufgeschweißt. Der Rohrstutzen hat einen Innendurchmesser nach DIN im Ausführungsbeispiel von 150 mm. In anderen Ausführungsbeispielen ist der Durchmesser kleiner als der Leitungsrohrdurchmesser.
Die dargestellten Schnittflächen des Rohrstutzens sind mit 5 und 6 bezeichnet. Die Schweißnähte besitzen dabei ausreichenden Abstand zur Kunststoffisolierung, um eine Beschädigung der Kunststoffisolierung zu verhindern. Die Situation ist im Fig.8 dargestellt. Zugleich ist in Fig.8 dargestellt, daß für die Abzweigung ein Loch bzw. Abgang zum Anschlußstutzen in das Leitungsrohr eingebrannt worden ist.

Fig.9 zeigt, daß beiderseits des Rohrstutzens Stulpen 7 und 8 aus schrumpffähigem PE auf die Rohr aufgeschoben worden sind. Das Aufschieben ist vor dem Verschweißen des Rohrstutzens und beim Verlegen des Rohres erfolgt. Vor dem Einschneiden und Abschälen der Kunststoffisolierung sind die Stulpen 7 und 8 in die Position beiderseits der Abzweigstelle gebracht worden. Nach dem Verschweißen des Rohrstutzens können die Stulpen 7 und 8 bis an die Wände 5 und 6 zurückgeschoben werden.

In der Stellung nach Fig.9 werden die Stulpen 7 und 8 geschrumpft, so daß der Rohrstutzen von den Stulpen 7 und 8 eingeschlossen sind. Der Rohrstutzen ist mit einem Deckel 9 versehen. Der Deckel 9 ist mit einer Schrumpfhaube 9a überzogen.

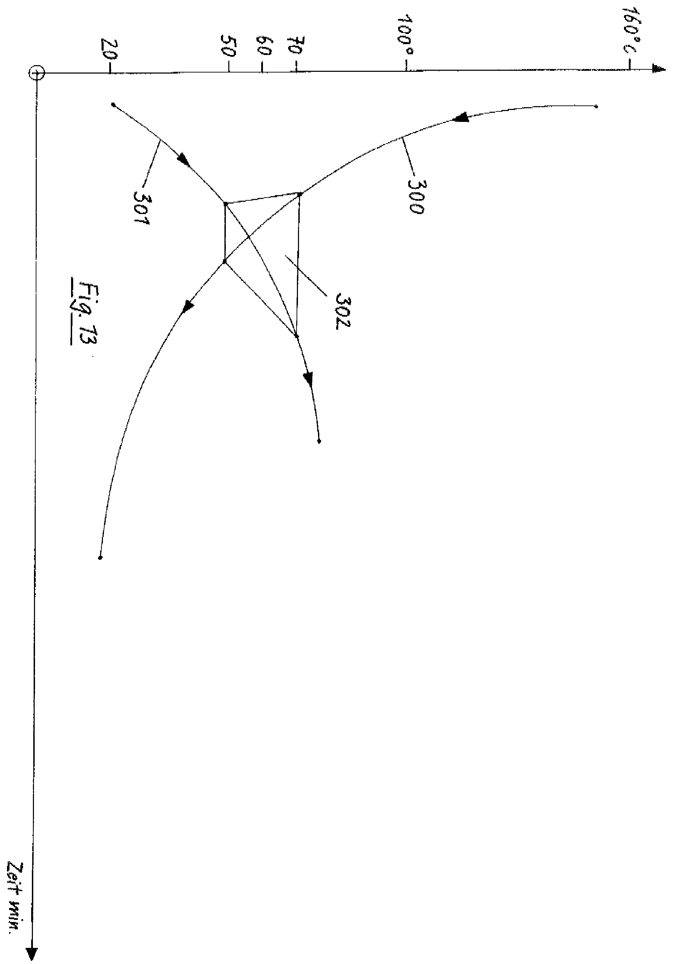

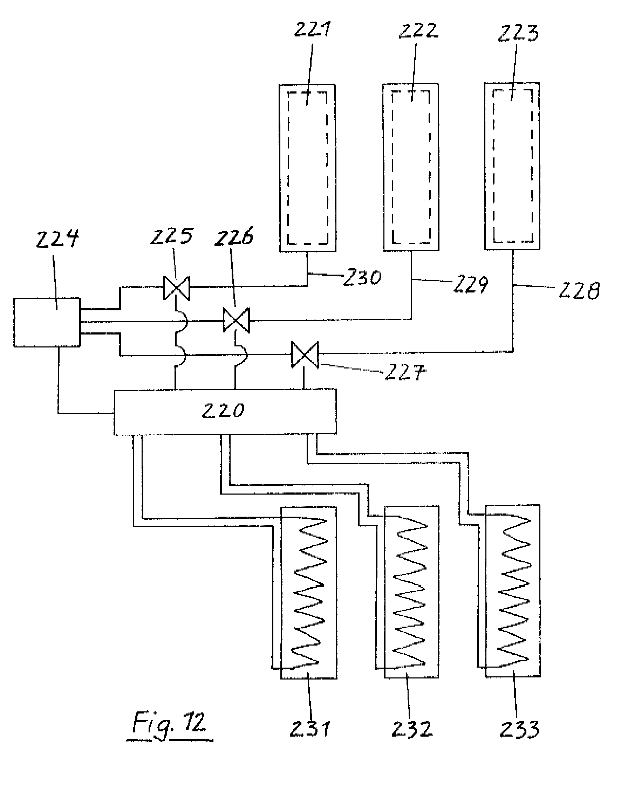

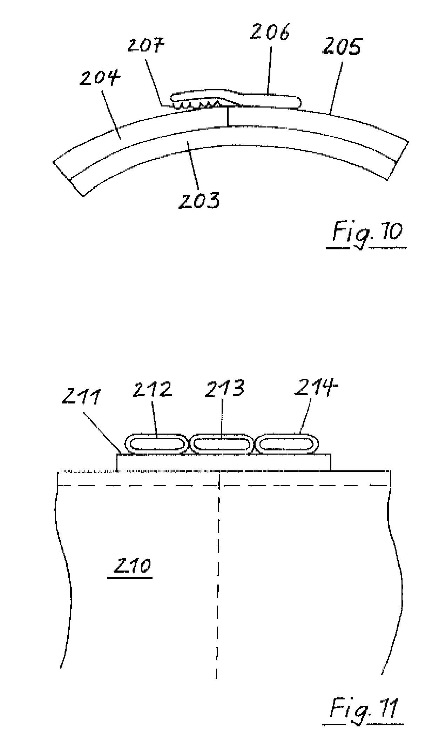

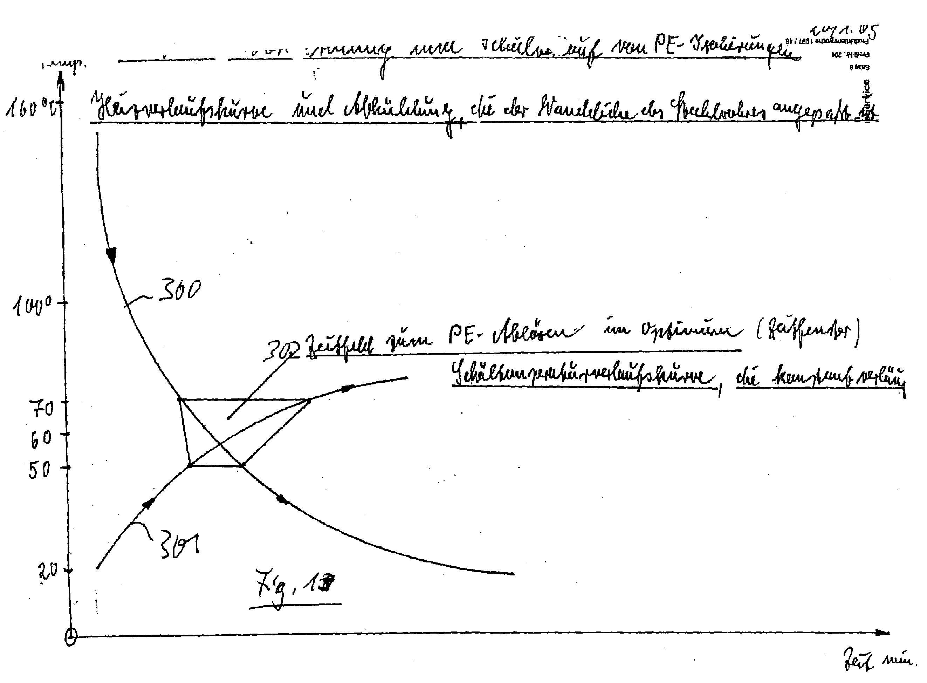

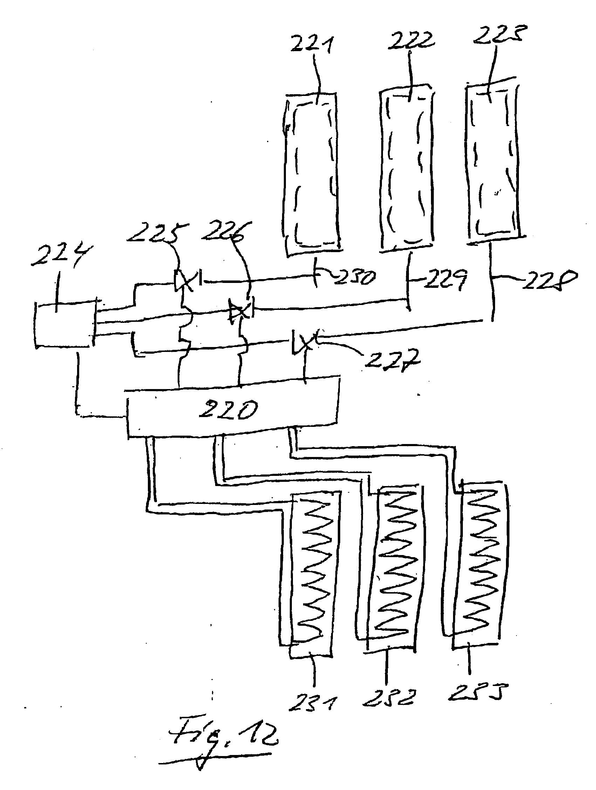

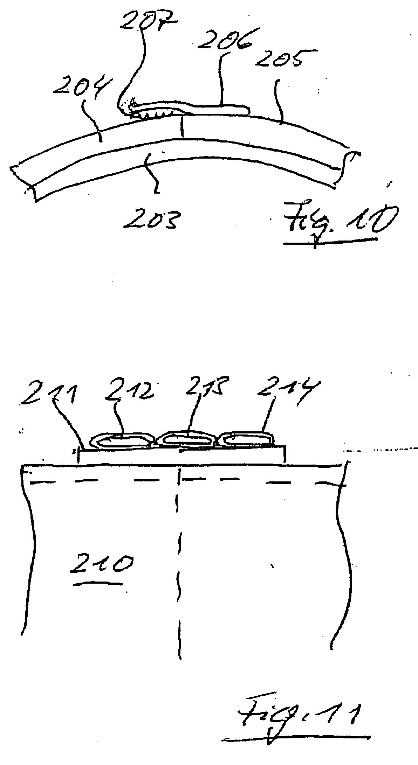

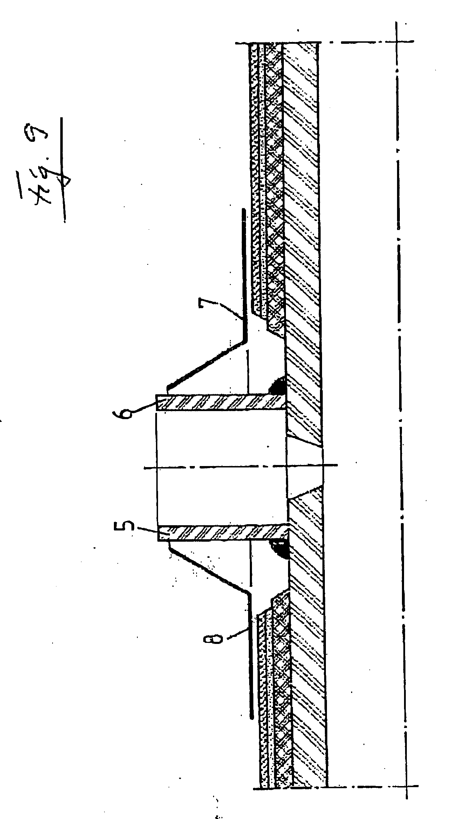

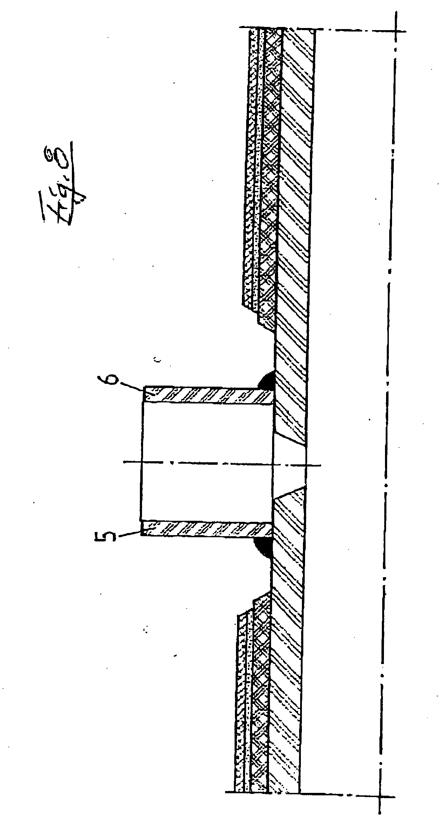

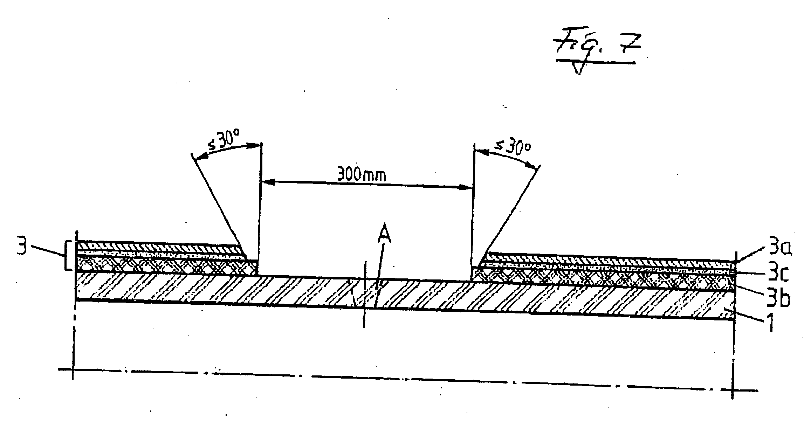

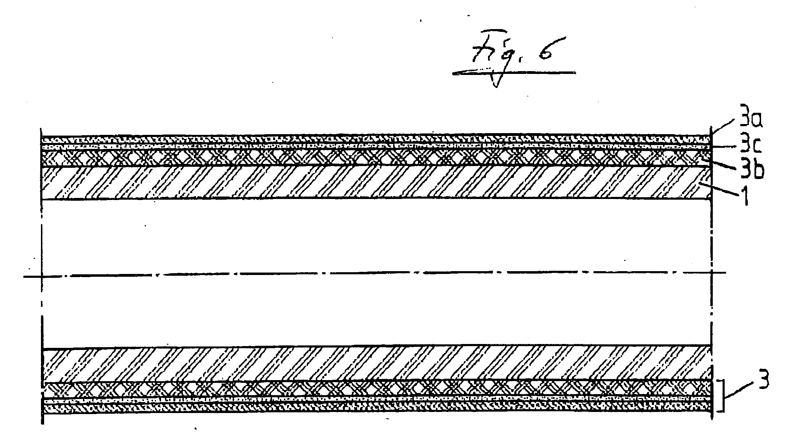

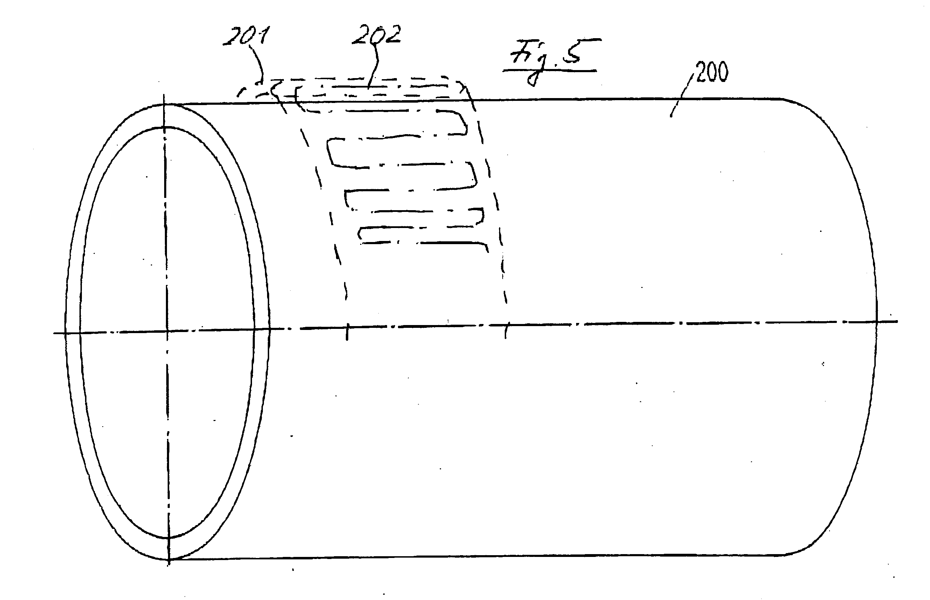

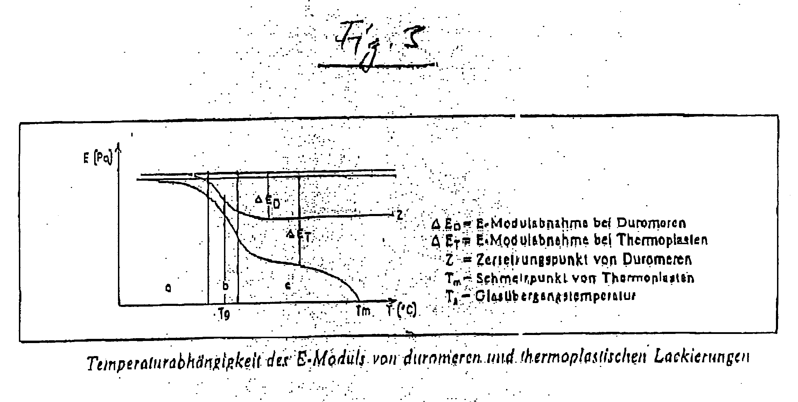

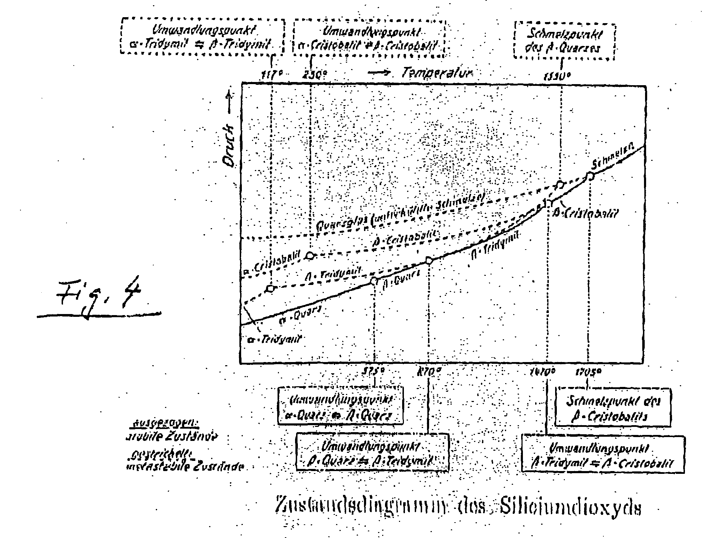

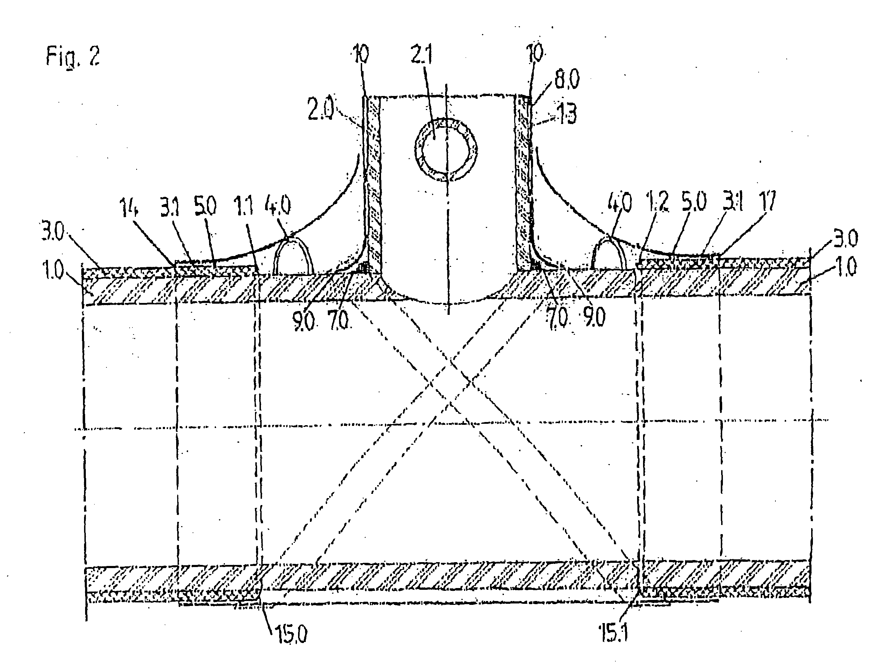

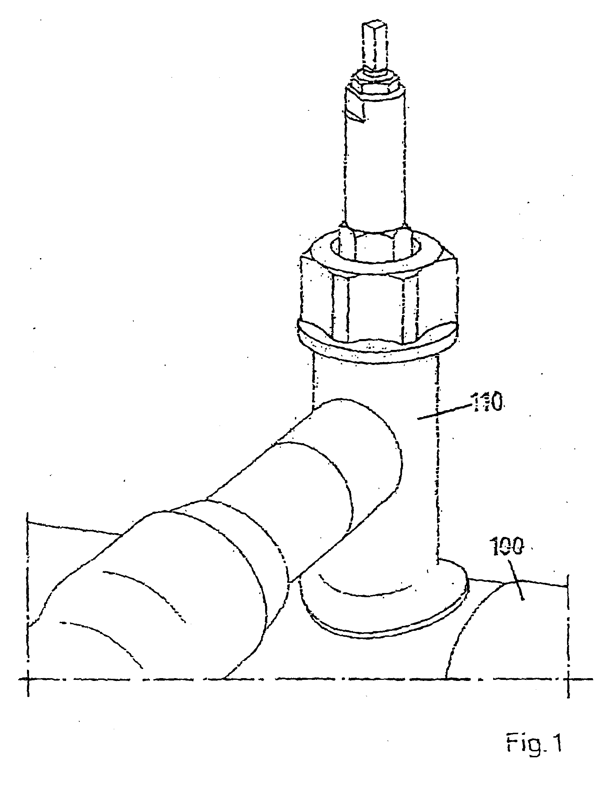

Der Deckel 9 und der Rohrstutzen symbolisieren im Ausführungsbeispiel ein Abzweigung mit einem Ventil 110, wie es in Fig. 1 an einer Leitung 100 dargestellt ist.

Die Abzweigung besitzt einen Sattelflansch. Mit dem Sattelflansch ist die Abzweigung mit der Leitung 100 verschweißt.

Fig. 2 zeigt ein anderes Ausführungsbeispiel:
Nach Fig. 2 ist eine gelochte Schrumpfmuffe 3.1 aus HDS-PE für die Nachisolierung der Abzweigstelle eines Hausanschlusses an einer Erdgasleitung vorgesehen. Die Schrumpfmuffe 3.1 besitzt mechanische Abstandhalter 4.0 zum Stahlrohr hin. Die Abstandshalter erlauben ein Einschweißen eines Anschlußflansches 2.0 der Abzweigung ohne Beschädigung der Schrumpfmuffe 3.1.
Die Schrumpfmuffe 3.1 besitzt ein geschnittenes Loch 1.1-1.2. Das geschnittene Loch 1.1-1.2 nimmt den Flansch 2.0 der Abzweigung für den Hausanschluß an der Erdgasleitung auf. Die Schrumpfmuffe 3.1 wird von den Abstandhaltern/Spreitzern von dem Stahlrohr im Abstand gehalten. Die Gesamtlänge der Nachisolierung beträgt im Ausführungsbeispiel 400 mm. Dabei findet im Ausführungsbeispiel eine Überlappung mit der Rohrisolierung statt. Die Überlappung beträgt im Ausführungsbeispiel 50 mm(1.1 bis 3.1). Die Überlappung bewirkt. daß die nach Patent Nr. EP 213061 entstandenen Schnittflächen der Rohrisolierung bei 15 und 15.1 überdeckte werden.
Der Flansch 2 wird mit einer weiteren Schrumpfmuffe 8 umgeben.

Bei der Nachisolierung wird wie folgt verfahren:
1. Das Stahlrohr 1.0 wird von der Korrosionsschutzisolierung aus Polyäthylen, aus Kleber und Epoxidgrundschicht 3.0 über ca. 300 mm Rohrlänge wegen auftretender Schweißwärme beim anschließenden Einschweißen eines Flansches für die Abzweigung entmantelt und mit Drahtbürsten gesäubert. Dabei wird im Ausführongsbeispiel das werkseitig erstellte Oberflächen- Strahlgebirge von ca. 0,05 mm mittlerer Rauhtiefe erhalten, d.h. die bei der Rohrherstellung entstandene Oberflächenrauhigkeit wird erhalten.
2. Der Entmantelungsvorgang beginnt an den Linien 1.1 und 1.2 bzw. 15 und 15.1 mit einem umlaufenden Schnitt, wie er im Patent EP 213061 beschrieben ist. Dabei darf die Epoxidharzgrundschicht nicht durchschnitten werden. Der Schnitt verläuft unter einem Winkel zur Rohrlängsachse, der kleiner oder gleich 30 Grad ist. Dabei handelt es sich um einen geometrisch geformten, umlaufenden Schnitt oder aber um einen flach auslaufenden Korbbogenschnitt unter einem gleichen Winkel.
   Der axiale Längsschnitt in der Abmantelungsfläche wird ebenso durchgeführt, ohne die Stahlrohroberfläche im gestrahlten Stahloberflächen-Gebirge des Rohres zu verändern.
3. Danach erfolgt die Durchtrennung des Leitungsrohres für den Hausanschlußrohr-Abgang, die Abzweigung.
4. Vor dem Verlegen des Stahlrohres wird die gelochte Schrumpfmuffe 3.1 auf das Rohr gestülpt/geschoben. Die Schrumpfmuffe dient dem Nachisolieren der Freifläche von den Linien 1.1 bis 1.2 bzw. 15 bis 15.1. Dort wird die Manschette 3.1 in Position gebracht und mit einem Spreitzwerkzeug 4.0 einseitig im Scheitel des Stahlrohres vor dem Anschweißen des Flansches 2.0 an dem Rohr 1.0 ein Abstand der Manschette zum Rohr gesichert. Dadurch wird verhindert, daß die Manschette beim Anschweißen des Flansches 2.0 an dem Rohr 1.0 verklebt oder verbrennt.
   Zusätzlich kann eine wärmedämmende Isolierkordel in dem Hohlraum zwischen der Manschette und dem Rohr um das Rohr gewickelt werden. Das schützt bei dem Verschweißen vor der Wärmebelastung und vor Funkenflug. Nach dem Verschweißen wird die Isolierkordel wieder entfernt.
5. Das Verschweißen erfolgt durch elektrische Rundschweißung des Flansches über dem Loch bzw. Abgang für die Abzweigung, des Hausanschlusses. Beim Schweißen halten die Abstandshalter die Schrumpfmuffe in ausreichendem Abstand von den Schweißflächen, so daß dort keine unzulässige Wärmebelastung auftritt.
6. Nach dem Schweißen folgt die Abkühlung der Schweißnaht an der Luft und die Entgratung der Schweißnaht. Gleichzeitig wird die angrenzende Stahlrohroberfläche durch Bearbeitung mit einer Drahtbürste wieder aufgeraubt, um den Schrumpfmuffen-Verklebungsvorgang in den Positionen 7.0 und 8.0 zwischen den Positionen 1.1 bis 9.0 und 1.2 bis 7.0 zu begünstigen. Ebenso wird die Verklebung des schrumpffähigen Formteile 8.0 durch Aufrauhung in der Endposition begünstigt.
7. Nach der Bearbeitung der zugänglichen Stahlrohroberfläche werden die Abstandshalter 4.0 zwischen den Positionen 3.1 und 5.0 sowie 3.1 und 4 entfernt, bevor die Verklebung der Flächen 1.1 bis 3.1 bzw, 1.2 bis 3.1 beginnt.
8. Die Verklebungen beginnen im Ausführungsbeispiel mit dem schrumpffähigen Formteil 8.0 als Schrumpftopf für den Flansch der Abzweigung in der Position 7.0. Erst dann wird die gelochte Schrumpfmuffe für das Stahlrohr positioniert.
9. wie oben beschrieben, ist der Formteil 8.0 auf den Flansch 2.0 der Abzweigung gestülpt und an den Flächen 7.0 und 9.0 auf der Schweißnaht und dem Stahlrohr durch Warmluftbeaufschlagung von außen aufgeschrumpft und aufgeklebt worden. Dabei ist das Formteil 8.0 selbst aktiv im Schrumpf und im Kleben.
10. Dann wird die Nachisolierung mit der weiteren Schrumpfmuffe am Stahlrohr fortgesetzt.
11. Die Übergänge der Schrumpfmuffe 3.1 auf dem Stahlrohr besitzen 50 mm Länge beidseitig von 1.1 bis 3.1 Ende. In dem Bereich sind die Stahlrohrflächen aufgerauht. Zum Aufrauhen reicht ein Schmitgelleinen. Das Aufrauhen begünstigt die Verklebung der Schrumpfmuffe 3.1.
12. Der Schrumpf wird nach Entfernen der Abstandshalter und nach Entfernen der Isolierkordel durch Erwärmung in Gang gesetzt. Die Erwärmung erfolgt im Bereich 1.1 bis 3.1 und auch im Bereich 1.2 bis 3.1 auf Schrumpftemperatur bis zum dicht schließenden Sitz auf diesen Flächen.
13. In der Position 9.0 wird durch mehrere Löcher in der Schrumpfmuffe der Abzweigung oberhalb der Verklebungsflächen am Umfang auf Stahlrohr trockenes Stickstoffgas zur Luftverdrängung eingespült. Das Stickstoffgas soll die Luft in dem Hohlraum zwischen dem Flansch 2.0 der Abzweigung und der Schrumpfmuffe 8.0 ersetzen. Die Luft soll dabei nach oben durch Ausgänge 10 an der Abzweigung entweichen. Stickstoffgas neigt weniger dazu durch die Abdichtung, insbesondere durch das Polyäthylen zu diffundieren als die anderen Bestandteile der Luft, nämlich als Kohlendioxid, Sauerstoff und Wasserdampf. Dadurch ist gewährleistet, daß das Stickstoffgas nicht ausdiffundiert und Luft eindiffundiert. Zugleich bildet das Stickstoffgas ein Inertmittel. Es schützt die Flächen des Stahlrohres vor der Korrosion.
14. Während des Spülvorganges/Luftverdrängungsvorganges wird an den Positionen 7.0 und 9.0 der Schrumpftopf von unten nach oben mittels Warmluft zum Schrumpfen und Andrücken von Hand und Verkleben gegeben, bis die letzte Luft in den oberen Ausgängen 10 entwichen ist.
15. Dann werden die oberen Luftausgänge 10 mit Bitumen-Oppanol Mischungen geschlossen.
16. Die Nachisolierung mit der gelochten Schrumpfmuffe setzt sich in der Befestigung in den beschriebenen Positionen auf dem Stahlrohr wie folgt fort:
17. Die Schrumpfmuffe auf dem Stahlrohr wird durch die Löcher 15.o und 15.1 mit Stickstoffgas beaufschlagt. Dadurch wird im Raum 1.1 bis 9.0 und 1.3 bis 7.0 die Luft ausgespült, bis ein inertes Gasgemisch entstanden ist. Das inerte Gasgemisch ist dadurch gekennzeichnet, daß eine offene Flamme in dem Gasgemisch erlischt.
18. Nach der Inertisierung wird der Verklebungsvorgang der gelochten Schrumpfmuffe von Position 7.0 und 9.0 gleichzeitig von den Randzonen des Flansches aus eingeleitet und gleichzeitig die Räume zwischen 1.1 und 9.0 und 1.2 und 7.0 weiter durchspült und die zugehörigen Schrumpfmuffenaußenflächen durch Warmluft zum Schrumpfen und Verkleben gebracht, Position 14.
19. Bei Erreichen der Positionen 7.0 und 9.0 sowie den Positionen 15 und 15.1 wird durch Andrücken von Hand die letzte Spulgasmenge bzw. Inertgasmenge ggfs, auch die letzten wesentlichen Luftreste ausgedrückt und alle Positionen 7.0 und 9.0 und 1 und 15.1 verschlossen, wie in Position 13 auch die Position 17.
20. Beidseitig im Nachisolierungsbereich ist mit der bestehenden Isolierung am Stahlrohr eine Überlappung vorgesehen. Das betrifft die Bereiche zwischen den Isolierpunkten 3.1 zu 3.1 am Stahlrohr 1.0. ebenso dort zwischen 15.0 und 15.1 sowie zwischen den Punkten 7.0 und 9.0 bis zu den Punkten 10.0 beidseitig am aufgesetzten Flansch 2. Dort ist eine 50%ig überlappende, selbstklebende PE-Folie mit einer Breite von 40 mm gewickelt. Die Foliendicke beträgt 0,25 mm.
   Vorab darunter ist im Kreuzverband mit demselben Material schräg liegend über die Punkte 7.0 und 9.0 bis zu den Punkten 15.0 und 15.1 dieselbe Klebetechnik angewendet worden.
21. Die Wickeltechnik dient dem nochmaligen Verteilen von noch möglichen Gasresten unter der Isolierung. Das verringert die Korrosionsmöglichkeiten.
   Durch die geschilderten Gesamtmaßnahmen werden im Übergang von Schrumpfmuffe/Kleber und Stahloberfläche überall gleichmäßige Verklebungsverhältnisse geschaffen, wobei die Schrumpfmuffe/Kleber entweder schließend auf dem Stahlrohr bzw. schließend auf der Abzweigung aufliegen, so daß dort keine Gasreste oder nur unschädliche Reste von Stickstoffgas verblieben sind.
   Wahlweise werden auch andere Schrumpfmuffen aus Kunststoff verwendet. In jedem Fall ist die Kunststoffschicht der Schrumpfmuffe mindestens 1 mm oder größer. Wie oben erläutert, ist als Kunststoff PE mit einer Dichte von mindestens 0.926 Gramm pro Kubikzentimeter vorgesehen. Anstelle von EP kommen auch PP und andere Thermoplaste in Betracht.
   Um dieser Kunststoffschicht einen bleibenden.
   Halt zu geben ist ein Schmelzkleber als Haftkleber vorgesehen. Die Haftkleber sind an sich bekannt.
   Nachstehend wird eine Schrumpfmuffe beschrieben, die aus einem 2-Schichtenkörper und 3 Eingängen zum Eingeben von Stickstoffgas, zum Durchspülen vor dem Verkleben, besteht bzw. 3 Ausgänge im oberen Bereich zum Luft-Abgang oder zum Abgang von Luft/Stickstoff-Gasgemisch besitz.
22. Die Funktion der 2 aufeinander liegenden Schmelzkleberschichten mit und ohne organischen Farbstoffen, die bei 2 verschiedenen Temperaturen mit Luftsauerstoff Reaktionen zeigen, etwa bei plus 40 Grad Celsius und /oder plus 80 Grad Celsius. Die 2 verschiedenen Farbänderungen zeigen bleibend bei Ausfall der isolierung nach dem Aufschneiden der Schrumpfmuffe den Ablauf und das Entstehen des Fehlers an.
   So wird der Isolierungsfehler zuordnungsbar, ob Verfahrensfehler oder Nutzungsfehler.
23. Das zusätzliche Anwenden eines Vakuums zwischen Stahlfläche und Muffe dient dazu, die Luft abzusaugen und das Spülen des Innenraumes mit Stickstoffgas zu erleichtern. Zusätzlich wird beim Schrumpfen der Haftschutz erhöht. Hierbei werden erstmalig Haftwerte erreicht, die in der werkseitigen Isolierproduktion des 3-Schichtenschutzes nach DIN-EN 10285 gefordert werden.
24. Der oben beschriebene Haftkleber besteht vorzugsweise aus Polyisobuthylen mittleren Molekulargewichtes von etwa 50.000 D oder etwa 10.000 D oder aus Mischungen von Materialien dieser Molekulargewichte. Ferner besteht der Haftkleber aus Harfparaffin zum besseren Gleiten (Verteilen) während der Herstellung der Schrumpfmuffe und während der Nutzung. Darüber hinaus ist Balsamharz ein Bestandteil des Haftklebers. Der Balsamharz dient der Erhöhung der Haftwirkung.
   Die Mischung kann die oben beschriebenen unterschiedlichen Anteile aufweisen. Im Ergebnis ist die vorgesehene Schrumpfmuffe im Temperaturbereich von minus 30 Grad Celsius bis plus 50 Grad Celsius voll einsetzbar. Bei sorgfältiger Verarbeitung ist keine Kantenunterrostung der 3-Schichtenschutz-Enden auf dem Leitungsrohr zu fürchten.
   Die Kleberschicht hat vorzugsweise eine Schichtdicke von 0,15 bis 0.25 mm und wird auf die Innenseite der Schrumpfmuffe aufgetragen und durch Wärmezuführung aktiviert.
   Die Wärmezuführung kann von außen und/oder von innen erfolgen, bevorzugt mit Warmluft bzw. erwärmtem Inertgas. Durch die Erwärmung wird der Schmelzkleber plastifiziert und entwickelt der Schmelzkleber seine Haftwirkung.

In anderen Ausführungsbeispielen ist eine Schrumpfmuffe aus PP oder aus einem anderen Thermoplasten wie LDPE oder MDPE oder HDPE vorgesehen. Je nach Die Betriebsdaten sind in der nachfolgenden Aufstellung zusammengetragen.
Dabei bezeichnet der Versuch 5 "Erprobungsstufe" die oben beschriebene Handhabung einer PE-Schrumpfmuffe.
Alle angegebenen Temperaturen können in den Ausführungsbeispielen um plus oder minus 5 Grad Celsius von den angegebenen Werten abweichen.

Die Glasübergangstemperatur ist in der Fig.3 anhand von Thermoplasten und Duromeren dargestellt. Die Temperaturabhängigkeit ist anhand der Änderungen des E-Moduls mit zunehmender bzw. abnehmender Temperatur dargestellt.
Die Fig. 3 zeigt die Temperaturabhängigkeit für Thermoplaste und Duromere. Der Glasübergangsbereich bildet sich im Bereich b aus.
Die Glasübergangstemperatur Tg liegt dort, wo die beiden Kurven sich im Bereich b am nachten kommen.

Im übrigen ist es günstig, wenn Rohre mit einer PE-Außenschicht mit oxidationshemmenden Stabilisatoren und mit einem Rußanteil verwendet werden. Die Isolierung dieser Rohre ist in sehr viel größerem Umfang UV-beständig, so daß übliche längere Lagerungen der Rohre der Isolierung wesentlich weniger schaden.

Die erfindungsgemäße Heizmatte 201 wird wie folgt angewendet:
1. Nach Auflegen der Heizmatte Erwärmung von Rohrenden zum Abisolieren auf 70 Grad Celsius
   1.1 zum Lösen der Kleberschicht
   1.2 zum (ganz oder teilweise) Durchschneiden der Kunststoffisolierung
   1.3 zum Aufweichen von EP-Harz-Schichten und anschließendem Ablösen der Kunststoffisolierung
   1.4 Behandlungsdauer 15 min, in anderen Ausführungsbeispielen 15 bis 20 min.
2. Nach Auflegen der Heizmatte Erwärmung von Abzweigungsstellen an Rohren auf 70 Grad Celsius
   2.1 zum Lösen der Kleberschicht
   2.2 zum (ganz oder teilweise) Durchschneiden der Kunststoffisolierung
   2.3 zum Aufweichen von EP-Harz-Schichten und anschließendem Ablösen der Kunststoffisolierung
   2.4 Behandlungsdauer 15 min. in anderen Ausführungsbeispielen 15 bis 20 min
3. nach EP-Beschichtung
   3.1Positionieren einer Schrumpfmuffe mit einer Schmelzkleberschicht an der Schrumpfmuffeninnenfläche über einer Schweißstelle
   3.2 Beaufschlagung des Zwischenraumes zwischen beschichtetem Rohr und Schrumpfmuffeninnenseite mit warmem Stickstoffgas als Inertgas und gleichzeitiges Einblasen von Siliziumdioxidpulver
   3.4 Erwärmung auf 130 Grad Celsius innerhalb von 30 min, in anderen Ausführungsbeispielen innerhalb 30 bis 35 min.
   3.5 gleichzeitig Schrumpfen der Schrumpfmuffe
4. Auflegen der Heizmatte und Erwärmung der EP-Schicht durch die Schrumpfmuffe hindurch zu deren Aushärten.
   4.1 Erwärmung der EP-Schicht auf 180 Grad Celsius für die Dauer von 5 min. in anderen Ausführungsbeispielen auf eine höhere Temperatur für eine geringere Dauer.

Die Fig. 10 zeigt eine Einzelheit des unter Ziff. 1.3 aufgelisteten Verfahrensschrittes.
Dabei ist der Abkühlungsverlauf eines aus dem Isolierungsvorgang kommenden Rohres anhand der Kurve 300 dargestellt. Die Rohre verlieren mit fortschreitender Zeit Temperatur. Die Temperatur der Rohre nähert sich der Umgebungstemperatur.
Die Kurve 301 stellt die Erwärmung der Rohrfläche mittels einer Heizmanschette oder Heizmatte dar. Im Zusammentreffen beider Kurven ergibt sich ein Temperaturfeld und Zeitfeld 302, in dem ein Abisolieren bzw. ein Abschälen des PE-Kunststoffmantels statt.

## Patentansprüche

1. Isolierung von Stahlrohren für Ergasleitungen, insbesondere Nachisolierung von insbesondere geschweißten Verbindungen von Erdgasleitungen, wobei die Erdgasleitungen aus Stahlrohren mit einer Außenisolierung aus Kunststoff bestehen,
wobei
die Kunststoffisolierung vorzugsweise aus einem thermoplastischen Kunststoff, noch weiter bevorzugt aus Polyäthylen, besteht,
und
vorzugsweise zwischen dem thermoplastischen Kunststoff und dem Stahlrohr mindestens noch eine EP-Schicht vorgesehen ist und
vorzugsweise zwischen der EP-Schicht und dem thermoplastischen Kunststoff eine Kleberschicht vorgesehen ist,
wobei die Isolierung sich ganz oder teilweise über die Länge der Rohre erstreckt, insbesondere die Röhrenden frei von Isolierung sind,
vorzugsweise mit einem EP-Pulver mit
a) einer Aushärtungstemperatur von 130 bis 200 Grad Celsius, vorzugsweise 160 bis 180 Grad Celsius, beträgt, wobei die Temperatur um plus oder minus 10%, vorzugsweise um plus oder minus 5%, von der angegebenen Temperatur abweichen kann und/oder
b) einer Aushärtezeit von 2 bis 30 min, vorzugsweise 2 bis 5 min beträgt, wobei die Aushärtezeit um plus oder minus 10%, vorzugsweise um plus oder minus 5%, von der angegebenen Zeit abweichen kann und/oder
c) einer Glasübergangstemperatur 65 bis 90 Grad Celsius, wobei die Temperatur um plus oder minus 10%, vorzugsweise um plus oder minus 57%, von der angegebenen Temperatur abweichen kann und/oder
d) zwischen der Stahlrohroberfläche und der Kunststoffummantelung und/oder der Kunststoffmuffe eine Siliziumdioxid-Schicht und/oder eine Titandioxidschicht vorgesehen ist, und/oder
e) die EP-Schicht und/oder die Kleberschicht und oder das Material der Kunststoffummantelung oder das Material der Kunststoffmuffe und/oder die Kleberschicht einen Anteil an Siliziumdioxid und/oder Titandioxid besitzt und/oder
f) die für den Aufbau der Isolierung, die für das Abisolieren und/oder die für das Nachisolieren erforderliche Wärme ganz oder teilweise mittels Heizmanschetten oder Heizmatten aufgebracht werden
und/oder

2. Nachisolierung von insbesondere geschweißten Abzweigungen von Erdgasleitungen,
wobei
die Erdgasleitungen aus Stahlrohren mit einer Außenisolierung aus Kunststoff bestehen,
wobei
die Kunststoffisolierung vorzugsweise aus einem thermoplastischen Kunststoff besteht, noch weiter bevorzugt aus Polyäthylen besteht,
wobei
vorzugsweise zwischen dem thermoplastischen Kunststoff und dem Stahlrohr mindestens noch eine EP-Schicht vorgesehen ist und vorzugsweise zwischen der EP-Schicht und dem thermoplastischen Kunststoff eine Kleberschicht vorgesehen ist,
wobei
Kunststoff isolierte Stahlrohre miteinander oder mit einem Abzweigungsstück verschweißt werden, wobei die Stahlrohre und/oder die Abzweigungsstücke an den Stoßstellen frei von der Isolierung sind oder die Isolierung dort entfernt wird
wobei
die Schweißstellen nach dem Schweißen gereinigt werden und eine Nachisolierung an den Schweißstellen erfolgt,
wobei
die Nachisolierung vorzugsweise durch Aufbringen einer EP-Schicht und durch Anwendung einer Schrumpfmuffe erfolgt, die durch Wärmeeinwirkung schrumpft und dabei die Rohrenden an der Außenseite der Kunststoffisolierung dicht umschließen, insbesondere mit einem EP-Pulver.
g) mit einer Aushärtungstemperatur von 130 bis 200 Grad Celsius, vorzugsweise 160 bis 180 Grad Celsius, wobei die Temperatur um plus oder minus 10%, vorzugsweise um plus oder minus 5%, von der angegebenen Temperatur abweichen kann und/oder
h) mit einer Aushärtezeit von 2 bis 30 min, vorzugsweise 2 bis 5 min, wobei die Aushärtezeit um plus oder minus 10%, vorzugsweise um plus oder minus 5%, von der angegebenen Zeit abweichen kann und/oder
i) mi einer Glasübergangstemperatur von 65 bis 90 Grad Celsius beträgt, wobei die Temperatur um plus oder minus 10%, vorzugsweise um plus oder minus 5%, von der angegebenen Temperatur abweichen kann und/oder
j) als Muffenmaterial LDPE mit einem Erweichungspunkt von 111 Grad Celsius verwendet wird, wobei die Temperatur um plus oder minus 10%, vorzugsweise um plus oder minus 5%, von der angegebenen Temperatur abweichen kann oder als Muffenmaterial MDPE mit einem Erweichungspunkt von 126 Grad Celsius verwendet wird, wobei die Temperatur um plus oder minus 10%. vorzugsweise um plus oder minus 5% von der angegebenen Temperatur abweichen kann oder als Muffenmaterial HDPE mit einem Erweichungspunkt von 130 Grad Celsius verwendet wird, wobei die Temperatur um plus oder minus 10%, vorzugsweise um plus oder minus 5% von der angegebenen Temperatur abweichen kann oder als Muffenmaterial PP mit einem Erweichungspunkt von 160 Grad Celsius verwendet wird, wobei die Temperatur um plus oder minus 10%, vorzugsweise um plus oder minus 5% von der angegebenen Temperatur abweichen kann oder als Muffenmaterial PE verwendet wird und/oder
k) zwischen der Stahlrohroberfläche und der Kunststoffummantelung oder der Kunststoffmuffe eine Siliziumdioxid-Schicht und/oder eine Titandioxidschicht vorgesehen
ist und/oder
l) die EP-Schicht und/oder die Kunststoffummantelung bzw. die Kunststoffmuffe einen Anteil an Siliziumdioxid und/oder Titandioxid besitzt
und/oder
m) die zum Aufbau der Isolierung und/oder die zum Abisolieren und/oder die zum Nachisolieren erforderliche Wärme ganz oder teilweise mittels Heizmanschette oder Heizmatte aufgebracht wird
2a) Verfahren nach Anspruch 1 oder 2, durch **gekennzeichnet**, daß für die Erwärmung und/oder deren Verlauf und/oder für deren Dauer eine Steuerung zu deren Regehung verwendet wird.

3. Verfahren nach einem der Ansprüche 1 bis 2a, **dadurch gekennzeichnet, daß** heim Nachisolieren die Heizmanschette oder Heizmatte außen an der Schrumpfmuffe aufliegt und die Erwärmung der EP-Schicht durch die anderen Schichten der Rohrisolierung hindurch erfolgt.

4. Verfahren nach einem der Ansprüche 1 bis 3, **dadurch gekennzeichnet, daß** die Erwärmung für das ganze, vorzugsweise das teilweise Durchschneiden der Kunststoffisolierung bei Isolierungen aus PE auf 50 bis 80 Grad Celsius, vorzugsweise 70Grad Celsius plus/minus 10 Grad Celsius erfolgt und daß bei Anwendung anderer Kunststoffe eine Erwärmung auf eine Temperatur in einem entsprechenden Bereich erfolgt
und/oder
bei Verwendung eines Heißklebers eine Erwärmung des Klebers von 40 Grad bis 165 Grad Celsius vorgesehen ist.

5. Verfahren nach einem der Ansprüche 1 bis 4, **dadurch gekennzeichnet, daß** die Erwärmung der Schrumpfmuffe zum Schrumpfen auf 110 bis 160 Grad Celsius erfolgt.

6. Verfahren nach einem der Ansprüche 1 bis 5, **dadurch gekennzeichnet, daß** zum Aushärten der EP-Schicht eine Erwärmung auf 130 bis 200 Grad Celsius erfolgt.
6a. Verfahren nach einem der Ansprüche 1 bis 6, **dadurch gekennzeichnet, daß** Heizmanschetten oder Heizmatten mit einer Leistung bis 0,7 Watt pro Quadratzentimeter verwendet werden.
6b. Verfahren nach Anspruch 6a, **dadurch gekennzeichnet, daß** für die Erwärmung zum Abisolieren Heizmanschetten oder Heizmatten mit einer Leistung bis 0,3 Watt pro Quadratzentimeter, vorzugsweise bis 0,2 Watt pro Quadratzentimeter verwendet wird.
6c. Verfahren nach Anspruch 6a, **dadurch gekennzeichnet, daß** für die Wärmebehandlung der isolierung Heizmanschetten oder Heizmatten mit einer Leistung von vorzugsweise 0,4 bis 0,6 Watt pro Quadratzentimeter verwendet werden.

7. Verfahren nach einem der Ansprüche 1 bis 6, **gekennzeichnet durch** die Verwendung von Temperaturfühlern zur Temperaturmessung und/oder Steuerung.
7a. Verfahren nach Anspruch 7, **gekennzeichnet, durch** Verwendung von Heizmatten oder Heizmanschetten mit veründerbarer Heizleistung.

8. Verfahren nach einem der Ansprüche 1 bis 7, **dadurch gekennzeichnet, daß** die Heizmanschette oder Heizmatte mindestens eine mit Strom beaufschlagbare Heizschlange besitzt.

9. Verfahren nach Anspruch 8, **gekennzeichnet durch** die Verwendung von mehrgängig verlegten Heizschlangen und/oder **durch** mehrere am Rohrumfang hintereinander angeordnete Heizschlangen und/oder abschnittsweise beaufschlagbare Heizschlangen.

10. Verfahren nach Anspruch 8 oder 9, **dadurch gekennzeichnet, daß** die Heizschlangen unterschiedlich mit Strom beaufschlagbar sind und/oder einzeln zuschaltbar oder abschaltbar sind und/oder in unterschiedlichen Reihenfolgen und/oder in Anpassung an eine bestimmte Funktion zuschaltbar oder abschaltbar sind.

11. Verfahren nach einem der Ansprüche 1 bis 10, **gekennzeichnet durch** einen Schalter mit verschiedenen Schaltstufen für das Durchschneiden, Ablösen bzw. Abziehen, Schrumpfen und Aushärten.
11a. Verfahren nach Anspruch 11, **gekennzeichnet durch** Verwendung eines Schalters, der zugleich als Zeitschalter ausgebildet ist.
11b. Verfahren nach Anspruch 11 oder 11a, **gekennzeichnet durch** Verwendung eines Schalters, der zugleich mit einem Datenspeicher gekoppelt ist oder als Datenspeicher ausgebildet ist, und/oder **gekennzeichnet durch** einen Schalter, der mit einem Rechner gekoppelte ist, oder als Reschner ausgebildet ist.

12. Verfahren nach einem der Ansprüche 1 bis 11, **gekennzeichnet durch** modularen Aufbau der Heizmanschetten oder Heizmatten.
12a. Verfahren nach Anspruch 12, **gekennzeichnet durch** eine Steckverbindung zwischen den verschiedenen Modulen für die Heizmanschetten oder Heizmatten.
12b. Verfahren nach Anspruch 12a, **gekennzeichnet durch** eine Steckverbindung zur elektrischen Verbindung und/oder eine Steckverbindung zur Steuerung der Module.
12c. Verfahren nach einem der Ansprüche 1 bis 12b, **gekennzeichnet durch** flexible Heizmanschetten oder Heizmatten.

13. Verfahren nach einem der Ansprüche 1 bis 12c, **gekennzeichnet durch** einen Mantel der Heizmanschetten oder Heizmatten aus warmfestem Gewirke oder Gewebe.

14. Verfahren nach Anspruch 13, **dadurch gekennzeichnet, daß** der Mantel an der Berührungsfläche mit der Schrumpfmuffe aus einem Fluorcarbonat besteht.

15. Verfahren nach einem der Ansprüche 1 bis 14, **gekennzeichnet durch** die Verwendung von PF-EP oder PT-FE als Fluorcarbonat.
15a. Verfahren nach einem der Ansprüche 13 bis 15, **dadurch gekennzeichnet, daß** Heizmanschette oder Heizmatte zur zu erwärmenden Fläche mit einem Trennmittel beschichtet ist.

16. Verfahren nach einem der Ansprüche 1 bis 15, **gekennzeichnet durch** die Verwendung eines Klettverschlusses für die Befestigung der Heizmanschette oder Heizmatte.

17. Verfahren nach einem der Ansprüche 1 bis 16, **gekennzeichnet durch** die Verwendung mindestens eines Bandes zum Umschließen der Heizmanschette oder Heizmatte auf dem Rohr.

18. Verfahren nach einem der Ansprüche 1 bis 17, **gekennzeichnet durch** Formschluß zwischen der Heizmanschette oder Heizmatte und der zu erwärmenden Fläche.
18a. Verfahren nach Anspruch 18, **gekennzeichnet durch** eine nachgiebige Wärmeübertragungslage zwischen der Heizmanschette oder Heizmatte und der zu erwärmenden Fläche zur Sicherung des Formschlusses zwischen Heizmanschette oder Heizmatte und der zu erwärmenden Fläche und/oder **durch** Verwendung einer aufblasbaren oder aufpumpbaren Heizmanschette oder Heizmatte oder eines aufblasbaren oder aufpumpbaren Anpreßschlauches zur Herstellung des Formschlusses zwischen Heizmanschette oder Heizmatte und zu erwärmender Fläche.

19. Verfahren nach einem der Ansprüche 1 bis 18a, **gekennzeichnet durch** eine aufblasbaren Anspreßschlauch zur Herstellung des Formschlusses zwischen Heizmanschette oder Heizmatte und zu erwärmender Fläche.
19a. Verfahren nach Anspruch 19, **gekennzeichnet durch** Schläuche, die in Umfangsrichtung und/oder in Längsrichtung der Rohre verlaufen.
19b. Verfahren nach Anspruch 19a, **gekennzeichnet durch** die Verwendung von Kammer bildenden Schläuchen.

20. Verfahren nach einem der Ansprüche 19 bis 19b, **gekennzeichnet durch** die Verwendung eines ausreichend luftdichten Schlauches und einer Druckluftquelle, insbesondere eines Kompressors zum Aufblasen des Schlauches.

21. Verfahren nach Anspruch 20, **gekennzeichnet durch** Verwendung eines Kunststoffschlauches als aufblasbarer Schlauch, insbesondere eines warmfesten Schlauches aus Butylkautschuk mit einer Armierung und/oder eines Schlauches mit einer außen liegenden Gewebeschicht.

22. Verfahren nach einem der Ansprüche 19 bis 21, **gekennzeichnet durch** die Verwendung eines aufblasbaren Schlauches und eines Kleinkompressors und/oder Verwendung von zusätzlichen Ventilen oder eines Ventiles mit Mehrfachfunktion, insbesondere eines Ventiles für die Drucksteuerung.

23. Verfahren nach einem der Ansprüche 18 bis 22, **gekennzeichnet durch** eine mehrteilige Bauart mit einem auf dem Rohr zu montierenden separaten Teil mit der Heizeinrichtung und einem darüber zu montierenden separaten Teil für die Aufbringung des Druckes, insbesondere **durch** Verwendung mehrerer in Rohrlängsrichtung und/oder in Rohrumfangsrichtung hintereinander liegender Heizeinrichtung und/oder **durch** Verwendung mehrerer in Rohrlängsrichtung hintereinander liegender Druckeinrichtungen.

24. Verfahren nach Anspruch 23, **gekennzeichnet durch** die Verwendung eines gemeinsamen Teiles zum Aufbringen des Druckes für mehrere Rohrdurchmesser.

25. Verfahren nach einem der Ansprüche 18 bis 24, **gekennzeichnet durch** ein Druck von 0.3 kg pro Quadratzentimeter, vorzugsweise einen Druck von 0,6 kg pro Quadratzentimeter, noch weiter bevorzugt einen Druck von 0,9 kg pro Quadratzentimeter.

26. Verfahren nach einem der Ansprüche 1 bis 25, **dadurch gekennzeichnet, daß** für jeden Umfang der zu erwärmenden Fläche angepaßte Heizmanschetten und Heizmatten Anwendung finden.

27. Verfahren nach einem der Ansprüche 1 bis 26, **gekennzeichnet durch** eine EDV-Aufzeichnung der Temperaturen und/oder und/oder der Drücke und/oder der Behandlungsdauer beim Erwärmen zum Durchschneiden und/oder beim Erwärmen zum Abziehen und/oder beim Erwärmen zum Schrumpfen und/oder beim Erwärmen zum Aushärten, insbesondere einer gemeinsamen Steuerung für die verschiedenen Heizeinrichtungen und/oder Druckeinrichtungen.

28. Verfahren nach Anspruch 27, **gekennzeichnet durch** Aufzeichnung des Temperaturverlaufes und/oder des Druckes über der Zeit.

29. Isolierung nach einem der Ansprüche 1 bis 28, **dadurch gekennzeichnet, daß** das Siliziumdioxid in unterschiedlichen Zuständen aufgetragen wird oder nach dem Auftragen zu unterschiedlichen Reaktionen gebracht wird.

30. Isolierung nach Anspruch 29, **dadurch gekennzeichnet, daß** in der Siliziumdioxidmischung Tridymit und Cristobalit vorkommen.

31. Isolierung nach Anspruch 30, **dadurch gekennzeichnet, daß** unterschiedliches Siliziumdioxid verwendet wird, wobei aus einem Bestandteil ab einer Umwandlungstemperatur von 117 Grad Celsius β-Tridymit und aus einem anderen Bestandteil ab einer Umwandlungstemperatur ab einer Umwandlungstemperatur von 250 Grad Celsius β-Cristobalit entsteht.

32. Isolierung nach einem der Ansprüche 29 bis 31, **dadurch gekennzeichnet, daß** das Siliziumdioxid mindestens zu 10%, vorzugsweise mindestens zu 30% und noch weiter bevorzugt zu mindestens 50% und höchst bevorzugt mindestens zu 70% aus α-Tridymit besteht.

33. Isolierung nach einem der Ansprüche 29 bis 32, **dadurch gekennzeichnet, daß** das Tridymit einen Anteil von 95Vol% bis 99Vol% und das Cristobalit einen von 5Vol% bis 1Vol%, bezogen auf die gesamte Siliziumdioxidmenge hat.

34. Isolierung nach einem der Ansprüche 29 bis 33, **dadurch gekennzeichnet, daß** eine Schicht mit Siliziumdioxid und/oder Titandioxid mit einer Dicke von 0,005 bis 0,02 mm.

35. Isolierung nach einem der Ansprüche 29 bis 34, **dadurch gekennzeichnet, daß** die Menge aus Siliziumdioxid und Titandioxid bis 20Vol% beträgt, vorzugsweise bis 15Vol% und noch weiter bevorzugt bis 12,5Vol% beträgt, bezogen auf die Menge aus EP und Siliziumdioxid und Tilandioxid, und daß die Menge aus Siliziumdioxid und Titandioxid mindestens 5Vol%, vorzugsweise mindestens 7,5Vol% beträgt, bezogen auf die Menge aus EP und Siliziumdioxid.

36. Isolierung nach einem der Ansprüche 29 bis 35, **dadurch gekennzeichnet, daß** die Menge an Titandioxid höchstens 50Vol%, vorzugsweise höchstens 35Vol% beträgt, bezogen auf die Menge aus Siliziumdioxid und Titandioxid, und daß die Menge an Titandioxid mindestens 10Vol%, vorzugsweise mindestens 20Vol% beträgt, bezogen auf die Menge aus Siliziumdioxid und Titandioxid.

37. Isolierung nach einem der Ansprüche 29 bis 36, **dadurch gekennzeichnet, daß**
a) das Siliziumdioxid als Pulver mit einer Korngröße von 0,005 bis 0,03 mm verwendet wird, vorzugsweise in Mischungen mit unterschiedlichen Kornbändern verwendet wird, wobei der eine Mischungsanteil Korngrößen von 0,005 bis 0,015 mm und der andere Mischungsanteil Korngrößen von 0,015 bis 0,03 mm besitzt und/oder
b) das EP-Pulver eine Korngröße kleiner 0,3 mm, vorzugsweise eine Korngröße kleiner 0,1 mm und noch weiter bevorzugt eine minimale Korngröße von 0,05 mm besitzt.

38. Isolierung nach einem der Ansprüche 29 bis 37, **dadurch gekennzeichnet, daß** die Siliziumdioxid-Schicht oder Titandioxidschicht zwischen der EP-Schicht und der Stahlrohroberfläche und/oder zwischen der Kunststoffummantelung und der Kleberschicht und/oder zwischen der Kleberschicht und der EP-Schicht vorgesehen ist oder daß anstelle der EP-Schicht eine Siliziumdioxid-Schicht und/oder eine Titandioxidschicht vorgesehen ist.

39. Isolierung nach einem der Ansprüche 29 bis 38, **dadurch gekennzeichnet, daß** das EP und/oder das Siliziumdioxid und/oder das Titandioxid pulverförmig auf die Beschichtungsfläche aufgebracht und aufgeschmolzen wird.

40. Isolierung nach einem der Ansprüche 29 bis 39, **dadurch gekennzeichnet, daß** das EP und/oder das Silizimndioxid und/oder das Titandioxid aufgeblasen und/oder aufgestreut und/oder gegen das Rohr geschleudert wird und an der Stahlrohroberfläche klebt, so daß es bis zum Aufschmelzen nicht abfällt.

41. Isolierung nach Anspruch 40, **dadurch gekennzeichnet, daß** Siliciumoxidpulver und/oder Titandioxidpulver in den Zwischenraum zwischen Rohr bzw. der Abzweigung und auf dem Rohr bzw. der Abzweigung sitzender ungeschrumpfter Schrumpfmuffe geblasen wird.

42. Isolierung nach einem der Ansprüche 29 bis 41, **dadurch gekennzeichnet, daß**
a) das Stahlrohr und das EP und/oder das Siliziumdioxid mit unterschiedlichen elektrischen Ladungen versehen werden, so daß das EP und/oder das Siliziumdioxid aufgrund der Ladungskräfte an der Stahlrohroberfläche haften und/oder
b) die EP-Schicht und das Siliziumdioxid mit unterschiedlichen elektrischen Ladungen versehen werden, so daß das Siliziumdioxid aufgrund der Ladungskräfte an der EP-Schicht haftet oder umgekehrt und/oder
c) die Kleberschicht und das Siliziumdioxid mit unterschiedlichen elektrischen Ladungen versehen werden, so daß das Siliziumdioxid aufgrund der Ladungskräfte an der Kleberschicht haftet oder umgekehrt.

43. Isolierung nach einem der Ansprüche 29 bis 42, **dadurch gekennzeichnet, daß** die Stahlrohroberfläche durch Stahlstrahlen auf eine Rauhigkeitstiefe gebracht wird, daß pulverförmiges EP oder pulverförmiges Siliziumdioxid an der Oberfläche haften.

44. Isolierung nach einem der Ansprüche 29 bis 43, **dadurch gekennzeichnet, daß** die Beschichtungsfläche erwärmt wird und/oder erwärmtes Pulver aufgetragen wird und/oder daß das Pulver mit einem erwärmten Trägermittel aufgetragen wird, insbesondere mit einer Vorwärmtemperatur von mindestens 50 Grad Celsius.

45. Isolierung nach einem der Ansprüche 29 bis 44, **dadurch gekennzeichnet, daß** die Kleberschicht mit einer Eigentemperatur von mindestens 150 Grad Celsius und/oder die PE-Schicht mit mindestens einer Eigentemperatur von 165 Grad Celsius aufgetragen wird.

46. Isolierung nach einem der Ansprüche 29 bis 45, **gekennzeichnet durch** eine Aushärtetemperatur von mindestens 130 Grad Celsius bei einer Härtezeit von höchstens 15min, vorzugsweise **durch** eine Aushärtetemperatur von mindestens 150 Grad Celsius bei einer Härtezeit von höchstens 10min und noch weiter bevorzugt **durch** eine Aushärtetemperatur von mindestens 180 Grad Celsius bei einer Härtezeit von höchstens 5min für die Nachisolierung.

47. Isolierung nach einem der Ansprüche 29 bis 46, **dadurch gekennzeichnet, daß** die Schrumpfmuffen die Kunststoffisolierung überlappen, wobei das Überlappungsmaß vorzugsweise mindestens 10 min und vorzugsweise höchstens 50mm beträgt und/oder die Schrumpfmuffen mit einer Kunststoffisolierung aus Polyäthylen kombiniert sind, deren Dichte mindestens 0.926 Gramm pro Kubikzentimeter und deren Dicke mindestens gleich 1 mm ist.

48. Isolierung nach einem der Ansprüche 1 bis 47, **dadurch gekennzeichnet, daß** eine an der Innenfläche klebefähige Schrumpfmuffe oder an der Berührungsfläche klebefähige Schrumpfmuffenteile verwendet werden, insbesondere Schrumpfmuffen oder Schrumpfmuffenteile, die mit einem Schmelzkleber versehen sind.

49. solierung nach einem der Ansprüche 29 bis 48, **dadurch gekennzeichnet, daß**
a) die Schrumpfmuffen zur Temperaturanzeige zumindest teilweise mit einem chemischen oder organischen und temperaturinstabilen Farbstoff beschichtet ist, wobei der Temperaturinstabilitätspunkt unterhalb der Grenze der Warmfestigkeit der Schrumpfmuffen liegt und wobei der Farbstoff bei weitergehender Erwärmung seine Farbe ändert und bei anschließender Abkühlung die erlangte Farbe behält und/oder
b) die Schrumpfmuffen zumindest teilweise mit einem Farbstoff versehen sind, der unter Anwesenheit von Sauerstoff bei Erreichen des Temperaturinstabilitätspunktes seine Farbe ändert und bei anschließender Abkühlung die Farbänderung behält.

50. Isolierung nach einem der Ansprüche 29 bis 49, **dadurch gekennzeichnet, daß** die instabile Farbschicht an den Schrumpfmuffen ein Polyisobuthylen ist.

51. Isolierung nach einem der Ansprüche 29 bis 50, **gekennzeichnet durch** mindestens zwei Polyisobuthylenmaterialien als instabile Farbschicht an den Schrumpfmuffen, die sich in ihrem Mol. Gew. voneinander unterscheiden, wobei der Unterschied mindestens 10.000 D, vorzugsweise mindestens 30.000 D und noch weiter bevorzugt mindestens 50.000 D beträgt.

52. Isolierung nach einem der Ansprüche 29 bis 51, **dadurch gekennzeichnet, daß** durch Evakuierung der Schrumpfmuffen in dem Zwischenraum zwischen Rohr bzw. Abzweigung und Schrumpfmuffen vorzugsweise mindestens ein Unterdruck von 0,3 bar, noch weiter bevorzugt ein Unterdruck von mindestens 0,5 bar und höchst bevorzugt ein Unterdrück von mindestens 0,7bar erzeugt wird.

53. Isolierung nach einem der Ansprüche 29 bis 52, **dadurch gekennzeichnet, daß** die Erwärmung der Schrumpfmuffen auf Schrumpftemperatur zusammen mit der Beaufschlagung der Schrumpfmuffen mit Spülgas erfolgt.

54. Isolierung nach einem der Ansprüche 29 bis 53, **gekennzeichnet durch** Schrumpfmuffen aus PE oder PP oder einem anderen Thermoplasten wie LDPE oder MDPE oder HDPE.

55. Isolierung nach einem der Ansprüche 1 bis 54, **dadurch gekennzeichnet, daß** die Überlappung au einem Rohrende bzw. an einer Abzweigung
a) bei Verwendung von LDPE für die Schrumpfmuffe eine Länge von 300 mm besitzt, wobei die Länge um 40%, vorzugsweise um 20%, noch weiter bevorzugt um 10% von der angegebenen Länge abweichen kann
b) bei Verwendung von MDPE für die Schrumpfmuffe eine Länge von 260 mm besitzt, wobei die Länge um 40%, vorzugsweise um 20%, noch weiter bevorzugt um 10% von der angegebenen Länge abweichen kann
c) bei Verwendung von HDPE für die Schrumpfmuffe eine Länge von 220 mm besitzt, wobei die Länge um 40%, vorzugsweise um 20%, noch weiter bevorzugt um 10% von der angegebenen Länge abweichen kann
d) bei Verwendung von PP für die Schrumpfmuffe eine Länge von 200 mm besitzt, wobei die Länge um 40%, vorzugsweise um 20%, noch weiter bevorzugt um 10% von der angegebenen Länge abweichen kann
e) bei Verwendung von PE für die Schrumpfmuffe eine Länge von 100 mm besitzt, wobei die Länge um 40%, vorzugsweise um 20%, noch weiter bevorzugt um 10% von der angegebenen Länge abweichen kann.

56. Isolierung nach einem der Ansprüche 1 bis 55, **gekennzeichnet durch** Verwendung gleicher oder unterschiedlicher Heizmanschetten und Heizmatten für unterschiedliche Rohre und unterschiedliche Nachisolierungen, insbesondere für unterschiedliche Schrumpfmuffen.

57. Isolierung nach Anspruch 56, **gekennzeichnet durch** die Verwendung von modular aufgebauten Heizmanschetten und Heizmatten.

58. Isolierung nach Anspruch 57, **gekennzeichnet durch** die Verwendung von gleichen oder unterschiedlichen Heizmanschettenmodulen oder Heizmattenmodulen.

59. Isolierung nach Anspruch 57 oder 58, **gekennzeichnet durch** die Verwendung von Steckverbindungen zwischen den Modulen mit einer gemeinsamen Beaufschlagung mit Strom aus einer Stromquelle und/oder einer gemeinsamen Steuerung.

60. Isolierung nach Anspruch 57 oder 58, **gekennzeichnet durch** die Verwendung von nebeneinander angeordnete und parallel nebeneinander betriebene Heizmanschetten und Heizmatten.

61. Isolierung nach Anspruch 56, **dadurch gekennzeichnet,**
**daß** bei Verwendung gleicher Heizmanschetten und Heizrohre für unterschiedliche Rohre und unterschiedliche Nachisolierungen die Rohre nach Arbeitsbereichen geordnet sind und
**daß** die Heizmannschetten und Heizmatten dem jeweils größten Rohr und/oder der größten Nachisolierung in einem Arbeitsbereich angepasst sind und
**daß** die Heizmannschetten und Heizmatten teilweise abschaltbar sind, so daß durch teilweises Abschalten eine Anpassung an kleinere Rohre und kleinere Nachisolierungen stattfinden kann.

62. Isolierung nach einem der Ansprüche bis 61, **dadurch gekennzeichnet, daß** die Rohre und Nachisolierungsstellen getrocknet werden.

63. Isolierung nach Anspruch 62, **gekennzeichnet durch** eine Beheizung der Rohrflächen und deren Isolierung zur Verdampfung von Feuchtigkeit, wobei die Beheizungstemperatur und die Beheizungsdauer im Rahmen der zulässigen Behandlungstemperatur und Behandlungsdauer am Rohr bzw. an den jeweiligen Isolierungsschichten liegt.

64. Isolierung nach Anspruch 63, **dadurch gekennzeichnet, daß** beim Trocknen die Beheizungstemperatur max 100 Grad Celsius und/oder die Beheizungsdauer maximal 20 min beträgt.

65. Isolierung nach einem der Ansprüche 1 bis 64, **dadurch gekennzeichnet, daß** das Abisolieren von Rohrenden, die aus der Bearbeitungshitze der Rohrisolierung kommen, innerhalb von höchstens 100 min erfolgt, wenn die Rohre einer Abkühlung an der Umgebungsluft unterliegen oder daß die Abkühlung der Rohre unterhalb einer gewünschten Schältemperatur in einer Wärmkammer verhindert wird.

66. Isolierung nach einem der Ansprüche 1 bis 65, **dadurch gekennzeichnet, daß** die obere Temperaturgrenze für Beheizung einer Kleberschicht aus Copolymerisat 165 Grad Celsius beträgt.

67. Isolierung nach einem der Ansprüche 1 bis 66, **dadurch gekennzeichnet, daß** zur Steuerung der Beheizung ein Rechner verwendet wird, in dem die Eigenschaften des Rohres und seiner Isolierung, insbesondere die zulässigen Beheizungstemperaturen der einzelnen Schichten und der die Beheizungsdauer gespeichert sind.
